# EUROPEAN PATENT SPECIFICATION

(11) **EP 3 130 616 B1**
(45) Date of publication and mention of the grant of the patent: **09.06.2021**
(21) Application number: 15809691.7
(22) Date of filing: 15.06.2015
(51) Int. Cl.: C08F 210/16, C08F 4/6592, C08F 4/659

(54) **POLYOLEFIN HAVING EXCELLENT ENVIRONMENTAL STRESS CRACK RESISTANCE**
POLYOLEFIN MIT HERVORRAGENDER SPANNUNGSRISSBESTÄNDIGKEIT
POLYOLÉFINE À EXCELLENTE RÉSISTANCE À LA FISSURATION SOUS CONTRAINTE DANS UN ENVIRONNEMENT DONNÉ

(30) Priority: 16.06.2014 KR 20140072808; 12.06.2015 KR 20150083314
(43) Date of publication of application: 15.02.2017
(73) Proprietor: LG Chem, Ltd., Seoul 07336 (KR)
(72) Inventor: LEE, Ye Jin, Daejeon 305-738 (KR); CHOI, Yi Young, Daejeon 305-738 (KR); LEE, Ki Soo, Daejeon 305-738 (KR); SONG, Ki Heon, Daejeon 305-738 (KR); KIM, Se Young, Daejeon 305-738 (KR); SUN, Soon Ho, Daejeon 305-738 (KR); KIM, Sun Mi, Daejeon 305-738 (KR); YOU, Young Suk, Daejeon 305-738 (KR)
(74) Representative: Goddar, Heinz J.
(86) International application number: PCT/KR2015/006008
(87) International publication number: WO 2015/194813

(56) References cited:
- EP-A1- 3 168 243
- JP-B2- 5 351 010
- KR-A- 20110 035 968
- KR-A- 20110 043 464
- KR-A- 20140 067 410
- US-A- 5 468 707
- US-A1- 2001 007 894
- US-A1- 2009 275 711
- DEBORAH M. SARZOTTI ET AL: "Microstructural Characterization of Molecular Weight Fractions of Ethylene/1,7-Octadiene Copolymers Made with a Constrained Geometry Catalyst", MACROMOLECULAR MATERIALS AND ENGINEERING., vol. 290, no. 6, 24 June 2005 (2005-06-24) , pages 584-591, XP055429972, DE ISSN: 1438-7492, DOI: 10.1002/mame.200500064

## Description

### BACKGROUND OF THE INVENTION

### (a) Field of the Invention

The present invention relates to polyolefin having excellent environmental stress crack resistance (ESCR). More specifically, the present invention relates to polyolefin that has high molecular weight, wide molecular weight distribution and high long chain branch content, and thus, has excellent environmental crack resistance and processibility, and thus, may be preferably used as a food container, a bottle cap, and the like.

### (b) Description of the Related Art

For a resin used as a food container, excellent processibility, mechanical properties and environmental stress crack resistance are required. Thus, there has been a continued demand for technology for the preparation of polyolefin that satisfies high molecular weight, wider molecular weight distribution and preferable comonomer distribution, and thus, may be preferably used as a container or a bottle cap.

Meanwhile, a metallocene catalyst using Group 4 transition metal may easily control the molecular weight and molecular weight distribution of polyolefin compared to the existing Ziegler-Natta catalyst, and may control the comonomer distribution of polymer, and thus, has been used for preparing polyolefin that simultaneously has improved mechanical properties and processibility. However, polyolefin prepared using a metallocene catalyst has a problem in terms of lowered processibility due to the narrow molecular weight distribution.

In general, as a molecular weight distribution is wide, the degree of viscosity decrease according to shear rate becomes large, thus exhibiting excellent processibility in the processing area, but polyolefin prepared using a metallocene catalyst, due to the relatively narrow molecular weight distribution, has high viscosity at high shear rate, and thus, load or pressure is high at the time of extrusion, thus lowering extrusion productivity, bubble stability is significantly lowered at the time of blow molding process, and the surface of prepared molded product becomes nonuniform, thus causing decrease in transparency.

Thus, multi-stage reactors including plural reactors have been used to obtain polyolefin having wide molecular weight distribution using a metallocene catalyst, and there has been an attempt to obtain polyolefin simultaneously satisfying wider multimodal molecular weight distribution and high molecular weight through each polymerization step in the plural reactors.

However, due to the high reactivity of the metallocene catalyst, it was difficult for polymerization to be properly achieved in the reactor of the latter stage according to the polymerization duration time in the reactor of the former stage, and as the result, there was a limit in the preparation of polyolefin simultaneously satisfying sufficiently high molecular weight and wider multimodal molecular weight distribution. Therefore, there is a continued demand for the development of technology capable of effectively preparing polyolefin that may simultaneously satisfy mechanical properties and processibility, and may be preferably used for a product.

U.S. Patent No. 6,180,736 describes a method of preparing polyethylene in a single gas-phase reactor or a continuous slurry reactor using one kind of a metallocene catalyst. Using this method, polyethylene production cost is low, fouling hardly occurs, and polymerization activity is stable. And, U.S. Patent No. 6,911.508 describes preparation of polyethylene with improved rheological properties using a novel metallocene catalyst compound, with 1-hexene as comonomers, in a single gas-phase reactor. However, polyethylene described in these patents also has narrow molecular weight distribution, and thus, it is difficult to exhibit sufficient impact strength and processibility.

U.S. Patent No. 4,935,474 described a method of preparing polyethylene having wide molecular weight distribution using two or more kinds of metallocene compounds. And, U.S. Patent No. 6,841,631, and U.S. Patent No. 6,894,128 prepare polyethylene having bimodal or multimodal molecular weight distribution with a metallocene-based catalyst using at least two kinds of metal compounds, and state that the polyethylene can be applied for the preparation of a film, a pipe, a hollow molded article and the like. However, although the prepared polyethylene has improved processibility, the distribution state according to the molecular weight in the unit particle is not uniform, and thus, the appearance is uneven and the properties are not stable even under relatively favorable processing conditions.

Under these circumstances, there is a continued demand for the preparation of more excellent resin with balanced properties or balanced properties and processibility, and the studies thereon is further required.

US 2001/007894 A1 discloses a copolymer of ethylene and 1-hexene with improved processability, suitable for the use as a molded product. The copolymer has a polydispersity index of 24.10, a melt flowrate ratio of 216, and environmental stress crack resistance of 700 hours and a weight average molecular weight of 226.100 g/mol. The copolymer contains long chain branches.

### SUMMARY OF THE INVENTION

It is an object of the present invention to provide polyolefin that has high molecular weight, wide molecular weight distribution and high long chain branch content, and thus, has excellent environmental stress crack resistance and processibility, and thus, may be preferably used as a food container, or a bottle cap.

The present invention provides a polyolefin, wherein polydispersity index(PDI) is 18 to 20, wherein the polydispersity index (PDI) is the ratio of weight average molecular weight and number average molecular weight, wherein weight average molecular weight and number average molecular weight are measured by GPC-FTIR at 160 °C;
melt flow rate ratio(MFR_{21.6}/MFR_{2.16}) is 200 to 400, wherein MFR_{21.6} and MFR_{2.16} are measured at 190°C according to ASTM 1238; and
the content of long chain branch(LCB) having a carbon number of 8 or more per 1,000 main chain carbons is 2 or more, wherein the content of long chain branch is measured as disclosed in the specification,
wherein density is 0.940 to 0.949 g/cc, wherein the density is measured according to ASTM 1505,
wherein the polyolefin is a copolymer of olefin monomer ethylene and alpha olefin comonomer.

Further embodiments are disclosed in the dependent claims.

According to the present invention, provided is polyolefin that has high molecular weight, wide molecular weight distribution and high long chain branch content, and thus, has excellent environmental crack resistance and processibility, and thus, may be preferably used as a food container or a bottle cap.

### BRIEF DESCRIPTION OF THE DRAWINGS

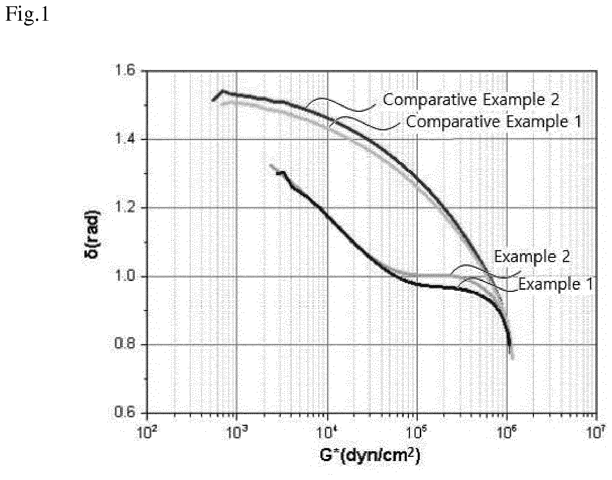

Fig. 1 is the van Gurp-Palmen plots of polyolefins according to Examples and Comparative Examples.

### DETAILED DESCRIPTION OF THE EMBODIMENTS

As used herein, terms including an ordinal such as 'a first' or 'a second' are used to explain various constitutional elements, and the terms are used only to distinguish one constitutional element from another constitutional element.

Unless otherwise described throughout the specification, technical terms are to mention specific embodiments, and do not intend to limit the present invention. And, the singular forms include the plural forms unless they have explicitly contrary meanings. And, the terms 'comprise', 'equipped with' or 'have' specify the existence of practiced properties, numbers, steps, constructional elements or combinations thereof, but do not exclude possibility of existence or addition of other properties, numbers, steps, constructional elements or combinations thereof.

Hereinafter, polyolefin according to specific embodiments of the invention will be explained.

According to the invention provided is a polyolefin, wherein polydispersity index(PDI) is 18 to 20, wherein the polydispersity index (PDI) is the ratio of weight average molecular weight and number average molecular weight, wherein weight average molecular weight and number average molecular weight are measured by GPC-FTIR at 160 °C;
melt flow rate ratio(MFR_{21.6}/MFR_{2.16}) is 200 to 400, wherein MM_{21.6} and MFR_{2.16} are measured at 190°C according to ASTM 1238; and
the content of long chain branch(LCB) having a carbon number of 8 or more per 1,000 main chain carbons is 2 or more, wherein the content of long chain branch is measured as disclosed in the specification,
wherein density is 0.940 to 0.949 g/cc, wherein the density is measured according to ASTM 1505,
wherein the polyolefin is a copolymer of olefin monomer ethylene and alpha olefin comonomer.

Polyolefin resin is obtained by polymerization of olefin monomer ethylene or copolymerization of ethylene and alpha olefin comonomer in the presence of a catalyst, and is being used in various fields due to the excellent properties.

The molecular weight and the molecular weight distribution of polyolefin are important factors determining the flowability and mechanical properties of the polymer that influence on the physical properties and processibility of the polymer. In order to make various polyolefin products, it is important to improve melt processibility through the control of molecular weight distribution. Thus, a method of preparing polyolefin having bimodal or wide molecular weight distribution to improve mechanical properties by high molecular weight part and processibility by low molecular weight part is being suggested.

Meanwhile, environmental stress crack resistance is known as one of very important properties of the resin used as a food container, or a bottle cap, is an indicator capable of judging stability and resistance of the resin against oil and fat contained in food and is important for assuring continuous performance of the resin.

High molecular weight polymer is generally known to have improved mechanical properties compared to lower molecular weight polymer, and thus, the environmental stress crack resistance of polyolefin resin may be improved as the molecular weight of polymer increases. However, as the molecular weight of polyolefin increases, processibility and flowability decreases, and polyolefin resin having poor processibility may not be easily formed in a desired shape, and thus, it is difficult to apply for a product.

To the contrary, the polyolefin resin of the present invention has improved environmental crack stress resistance and yet has good processibility due to high polydispersity index and melt flow rate ratio, and thus, is favorable for forming and may be used in various fields as high functional resin.

The polyolefin resin of the present invention has high molecular weight, wide molecular weight distribution and high long chain branch content, and has excellent properties and processibility.

Namely, the olefin copolymer of the present invention has high melt flow rate ratio(MFRR) together with wide molecular weight distribution and high long chain branch content compared to previously known olefin copolymers, and thus, may have remarkably improved flowability and exhibit more excellent processibility.

First, the polyolefin of the present invention has polydispersity index(PDI) of about 18 to about 20, thus having wide molecular weight distribution.

And, the polyolefin of the present invention has high long chain branch content. The branch is produced by the incorporation of alpha-olefin comonomers such as 1-butene, 1-hexene, 1-octent into the carbon chain of the main chain during a polymerization process, and it includes both short chain branch(SCB) with a carbon number of 2 to 7 and long chain branch(LCB) with a carbon number of 8 or more per 1,000 main chain carbons. As the copolymerizability of comonomer is high in the polymerization process of polyolefin, the branch content is high, and as the branch content is high, satisfactory processibility may be exhibited.

The polyolefin of the present invention has high branch content, and particularly, is characterized by high long chain branch(LCB) content.

In general, the existence of LCB in polyolefin may be judged by whether or not it has a point of inflection in a van Gurp-Palmen plot as measured using a rheometer. The x-axis of the van Gurp-Palmen plot represents an absolute value of complex modulus (G*, unit: dyn/cm²), and the y-axis represents phase angle (δ, unit: rad).

Referring to Fig. 1 that shows the van Gurp-Palmen plot of polyolefin according to examples, the polyolefins of Examples 1 and 2 have a point of inflection in the region of high complex modulus, while the polyolefins of Comparative Examples 1 and 2 do not have a point of inflection. Such a characteristic of the plot results from LCB of polyolefin, and the polyolefin of the present invention comprising at least 2 LCB per 1,000 main chain carbons has excellent swelling property, bubble stability, melt fracture and sagging property and the like, and thus, it may be variously applied according to its uses and provide products having improved properties.

The polyolefin of the present invention has 2 or more LCB content per 1,000 main chain carbons. More specifically, according to one embodiment of the invention, LCB content per 1,000 main chain carbons may have 2 or more, or 3 or more, or 4 or more. And, although not specifically limited, the upper limit of LCB may be 20 or less, or 15 or less, or 10 or less or 8 or less.

And, the polyolefin of the present invention has total branch content including SCB and LCB of 4 or more per 1,000 main chain carbons. More specifically, according to one embodiment of the invention, the branch content is 4 or more, or 4 or more, or 6 or more, or 7 or more per 1,000 main chain carbons. And, although not specifically limited, the upper limit of the branch content may be 20 or less, or 15 or less, or 10 or less.

And, the polyolefin of the present invention has melt flow rate ratio(MFRR, MFR_{21.6}/MFR_{2.16}) of about 200 to about 400, preferably about 220 to about 400, more preferably about 220 to about 300.

As such, the polyolefin of the present invention has very wide molecular weight distribution, high long chain branch content and high melt flow rate ratio, thus exhibiting high processibility.

And, the polyolefin of the present invention may have environmental stress crack resistance(ESCR) measured according to ASTM D 1693 of about 150 hours or more, preferably about 200 hours or more. If ESCR is 150 hours or more, the polyolefin may stably maintain performance when used as a food container and the like, and thus, the upper limit is substantially of no significance, but for example, it may be about 150 to about 10,000 hours, or about 200 to about 10,000 hours, or about 200 to about 1,000 hours, or about 200 to about 500 hours. As such, since the polyolefin exhibits high performance environmental stress crack resistance, it has high stability when formed into a product, and may maintain continuous performance.

In brief, the polyolefin according to the present invention having polydispersity index, environmental stress crack resistance and melt flow rate ratio of the above ranges has excellent processibility, formability, physical strength, and stability, and thus, it may be applied in various fields, and particularly, used for producing products such as a food container, or a bottle cap.

And, the polyolefin according to the present invention may have melt index(MI) measured at 190°C under 2.16kg load condition according to ASTM 1238 of about 0.1 to about 0.9 g/10min, preferably about 0.3 to about 0.5 g/10min, but not limited thereto.

And, the polyolefin according to the present invention has density of about 0.940 to about 0.949 g/cc, preferably about 0.945 to about 0.949 g/cc.

The weight average molecular weight of the polyolefin according to the present invention may be about 150,000 to about 250,000 g/mol, preferably about 180,000 to about 200,000 g/mol, but not limited thereto.

However, when melt index, density, weight average molecular weight and the like are within the above explained ranges, properties may be more optimized to achieve high impact strength and good mechanical properties.

The polyolefin according to the present invention is a copolymer of olefin monomer ethylene and alpha olefin comonomer.

As the alpha olefin comonomer, alpha olefin having a carbon number of 4 or more may be used. The alpha olefin having a carbon number of 4 or more may include 1-butene, 1-pentene, 1-hexene, 4-methyl-1-pentene, 1-octene, 1-decene, 1-docene, 1-tetradecene, 1-hexadecene, 1-octadecene or 1-eicosens, but is not limited thereto. Among them, alpha olefin having a carbon number of 4 to 10 is preferable, and one kind or various kinds of alpha olefins may be used together as comonomers.

In the copolymerization of ethylene and alpha olefin comonomers, the content of alpha olefin commoners may be about 0.1 to about 45 wt%, preferably about 0.1 to about 10 wt%.

The polyolefin according to the present invention with the above explained characteristics may be obtained by the copolymerization of ethylene and alpha olefin using a hybrid metallocene compound comprising two or more kinds of metallocene compounds of different structures as a catalyst, and the polyolefin may have polydispersity index, melt flow rate ratio, and environmental stress crack resistance of the above explained ranges.

More specifically, the polyolefin of the present invention may be prepared by polymerizing olefin monomers, in the presence of a hybrid metallocene catalyst comprising one or more kind of a first metallocene compound represented by the following Chemical Formula 1, one or more kind of a second metallocene catalyst, and a cocatalyst. 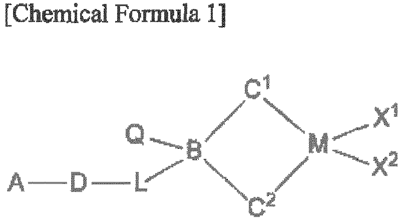 in the Chemical Formula 1,
A is hydrogen, halogen, a C1 to C20 alkyl group, a C2 to C20 alkenyl group, a C6 to C20 aryl group, a C7 to C20 alkylaryl group, a C7 to C20 arylalkyl group, a C1 to C20 alkoxy group, a C2 to C20 alkoxyalkyl group, a C3 to C20 heterocycloalkyl group, or a C5 to C20 heteroaryl group;
D is -O-, -S-, -N(R)- or -Si(R)(R')-, and R and R' are identical to or different from each other, and are each independently hydrogen, halogen, a C1 to C20 alkyl group, a C2 to C20 alkenyl group, or a C6 to C20 aryl group;
L is a C1 to C10 linear or branched alkylene group;
B is carbon, silicon or germanium;
Q is hydrogen, halogen, a C1 to C20 alkyl group, a C2 to C20 alkenyl group, a C6 to C20 aryl group, a C7 to C20 alkylaryl group, or a C7 to C20 arylalkyl group;
M is Group 4 transition metal;
X¹ and X² are identical to or different to each other, and are each independently halogen, a C1 to C20 alkyl group, a C2 to C20 alkenyl group, a C6 to C20 aryl group, a nitro group, an amido group, a C1 to C20 alkylsilyl group, a C1 to C20 alkoxy group, or a C1 to C20 sulfonate group;
C¹ and C² are identical to or different from each other, and are each independently represented by one of the following Chemical Formula 2a, Chemical Formula 2b or Chemical Formula 2c, provided that both C¹ and C² are not Chemical Formula 2c; 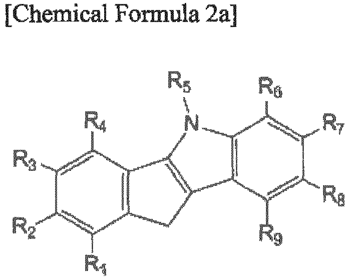 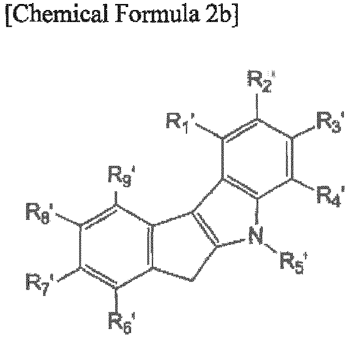 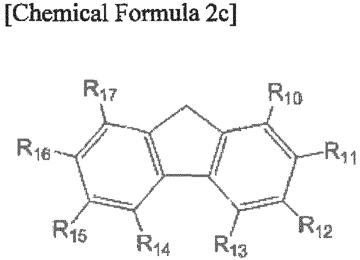
in the Chemical Formula 2a, 2b and 2c,
R1 to R17 and R1' to R9' are identical to or different from each other, and are each independently hydrogen, halogen, a C1 to C20 alkyl group, a C2 to C20 alkenyl group, a C1 to C20 alkylsilyl group, a C1 to C20 silylalkyl group, a C1 to C20 alkoxysilyl group, a C1 to C20 alkoxy group, a C6 to C20 aryl group, a C7 to C20 alkylaryl group, or a C7 to C20 arylakyl group, and two or more neighboring groups of R10 to R17 may be connected to each other to form a substituted or unsubstituted aliphatic or aromatic ring.

In the method for preparing polyolefin of one embodiment, olefin monomers are polymerized in the presence of a supported metallocence catalyst wherein a first metallocene compound represented by the Chemical Formula 1, and a second metallocene catalyst are supported, to prepare polyolefin.

In this preparation method, the first metallocene compound of the Chemical Formula 1 forms a structure wherein an indeno indole derivative and/or a fluorene derivative are crosslinked by a bridge, and has lone electron pair capable of acting as a Lewis base in the ligand structure, and thus, is supported on the carrier surface having Lewis acid property to exhibit higher polymerization activity. And, as it includes electron-rich indeno indole group and/or fluorenyl group, it has high activity, and due to appropriate steric hindrance and the electronic effect of the ligand, it has low hydrogen reactivity, and maintains high activity. And, as the nitrogen atom of the indeno indole derivative stabilizes beta-hydrogen of growing polymer chain by hydrogen bond, beta-hydrogen elimination may be inhibited, and thus, higher molecular weight olefin polymer may be polymerized.

Furthermore, by selectively using a molecular weight control agent and hydrogen, together with a hybrid supported metallocene compound comprising a second metallocene compound that can prepare medium molecular weight or low molecular weight polyolefin in addition to the first metallocene compound of the Chemical Formula 1, polyolefin having high molecular weight and wide molecular weight distribution and yet satisfying high environmental stress crack resistance, which was difficult to prepare using the existing metallocene catalyst, may be prepared.

And, in order to synthesize polyolefin resin having bimodal or multimodal molecular weight distribution, two or more reactors should be used in the prior art, but in the present invention, polyolefin having desired molecular weight distribution may be realized even with a single reactor. Thus, even with a single gas phase reactor or in a single loop slurry polymerization process that could not produce products having bimodal or multimodal molecular weight distribution and excellent properties in the prior art, polyolefin having desired properties may be prepared.

Hereinafter, each substituent of the first metallocene compound of the Chemical Formula 1 is explained in detail.

The C1 to C20 alkyl may include linear or branched alkyl, specifically, methyl, ethyl, propyl, isopropyl, n-butyl, tert-butyl, pentyl, hexyl, heptyl, and octyl, but is not limited thereto.

The C2 to C20 alkenyl may include linear or branched alkenyl, and specifically, allyl, ethenyl, propenyl, butenyl, and pentenyl, but is not limited thereto.

The C6 to C20 aryl may include monocyclic or condensed cyclic aryl, and specifically, phenyl, biphenyl, naphthyl, phenantrenyl, and fluorenyl, but is not limited thereto.

The C5 to C20 heteroaryl may include monocyclic or condensed cyclic heteroaryl, and specifically, carbozolyl, pyridyl, quinoline, isoquinoline, thiophenyl, furanyl, imidazole, oxazolyl, thiazolyl, triazine, tetrahydropyranyl, and tetrahydrofuranyl, but is not limited thereto.

The C1 to C20 alkoxy may include methoxy, ethoxy, phenyloxy, cyclohexyloxy, , but is not limited thereto.

The Group 4 transition metal may include titanium, zirconium and hafnium, but is not limited thereto.

It is more preferable that in the Chemical Formulae 2a, 2b and 2c which are ligand-derived structures included in the Chemical Formula 1, R₁ to R₁₇ and R₁' to R₉' are each independently hydrogen, methyl, ethyl, propyl, isopropyl, n-butyl, tert-butyl, pentyl, hexyl, heptyl, octyl, phenyl, halogen, trimethylsilyl, triethylsilyl, tripropylsilyl, tributylsilyl, triisopropylsilyl, trimethylsilylmethyl, methoxy, or ethoxy, but are not limited thereto.

It more preferable that L of the Chemical Formula 1 is C4 to C8 linear or branched alkylene, but is not limited thereto. And, the alkylene group may be unsubstituted or substituted with C1 to C20 alkyl, C2 to C20 alkenyl, or C6 to C20 aryl.

And, it is preferable that A of the Chemical Formula 1 is hydrogen, methyl, ethyl, propyl, isopropyl, n-butyl, tert-butyl, methoxymethyl, tert-butoxymethyl, 1-ethoxyethyl, 1-methyl-1-methoxyethyl, tetrahydropyranyl, or tetrahydrofuranyl, but is not limited thereto.

And, it is preferable that B of the Chemical Formula 1 is silicon, but is not limited thereto.

According to one embodiment of the invention, specific examples of the compound represented by the Chemical Formula 2a may include compounds represented by the following structural formulae, but are not limited thereto.

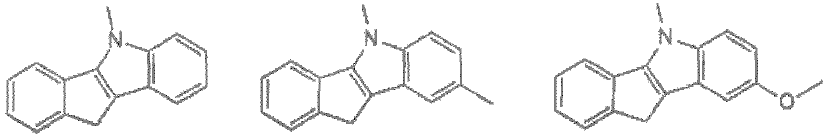

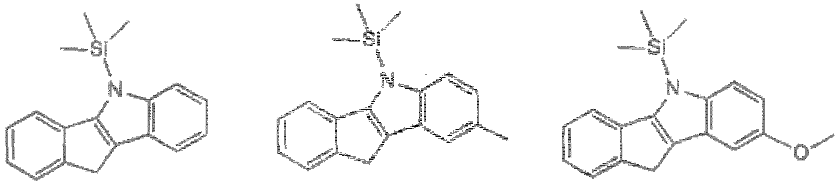

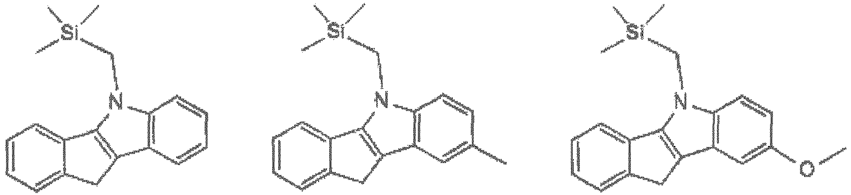

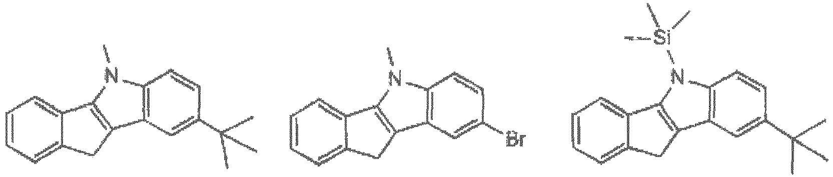

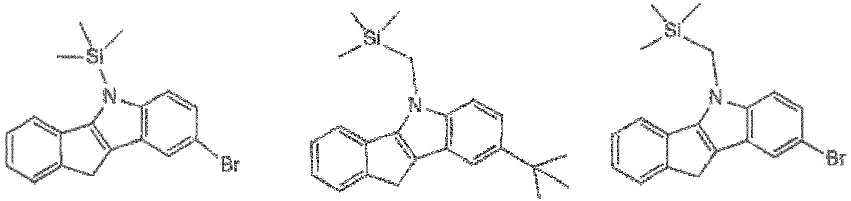

According to one embodiment of the invention, specific examples of the compound represented by the Chemical Formula 2b may include compounds represented by the following structural formulae, but are not limited thereto.

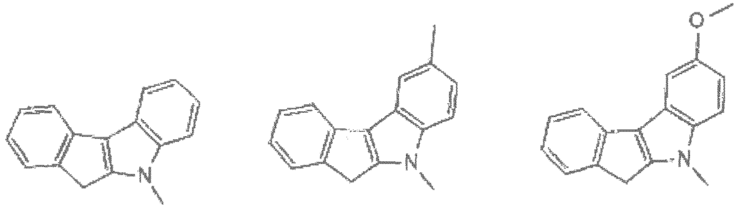

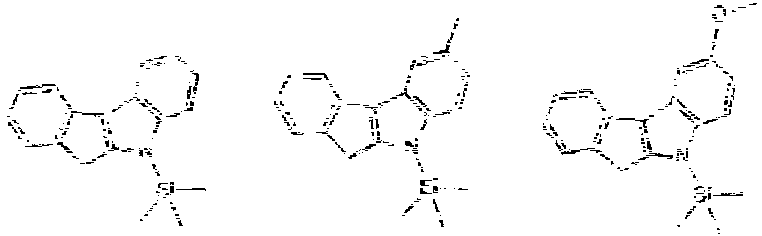

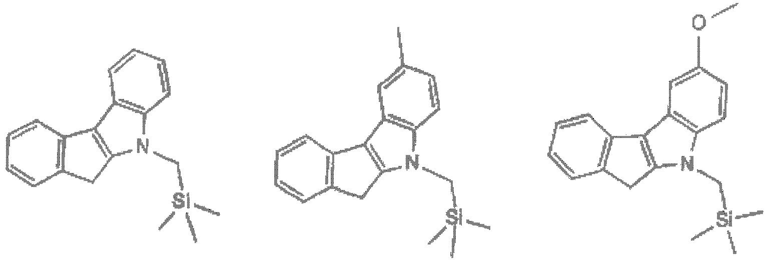

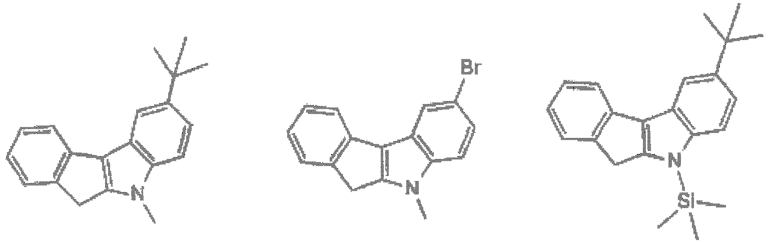

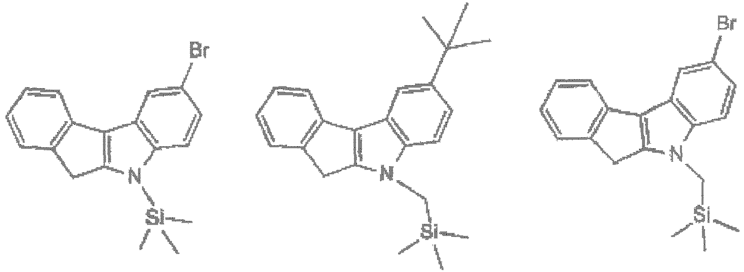

According to one embodiment of the invention, specific examples of the compound represented by the Chemical Formula 2c may include compounds represented by the following structural formulae, but are not limited thereto.

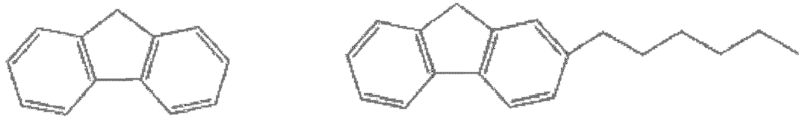

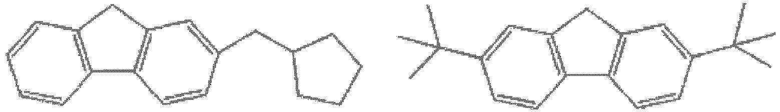

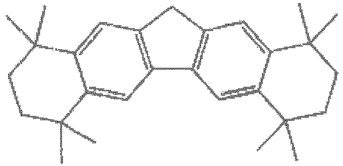

In addition, specific examples of the first metallocene compound represented by the Chemical Formula 1 may include compounds represented by the following structural formulae, but are not limited thereto.

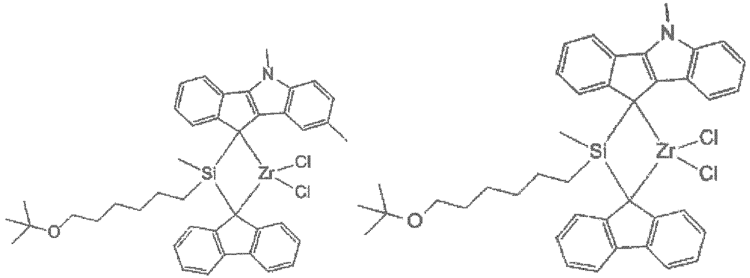

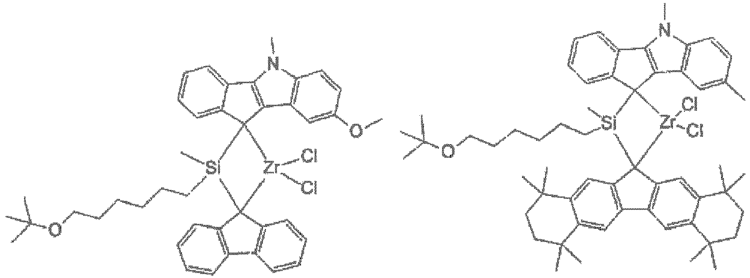

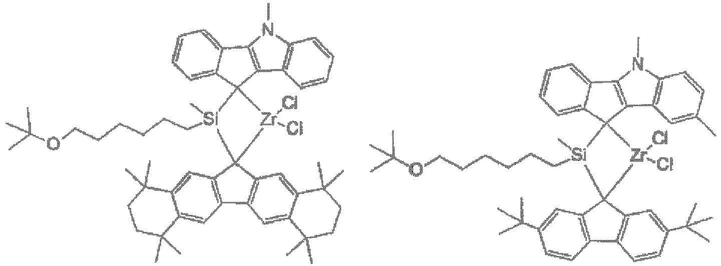

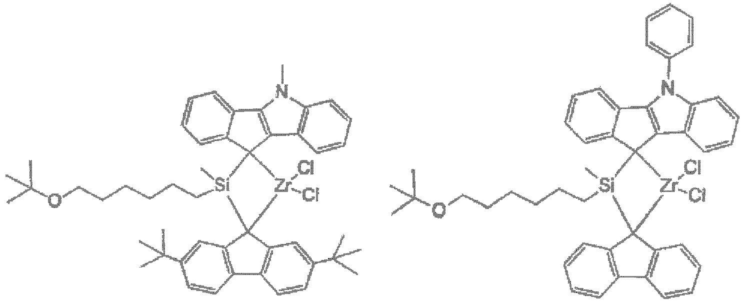

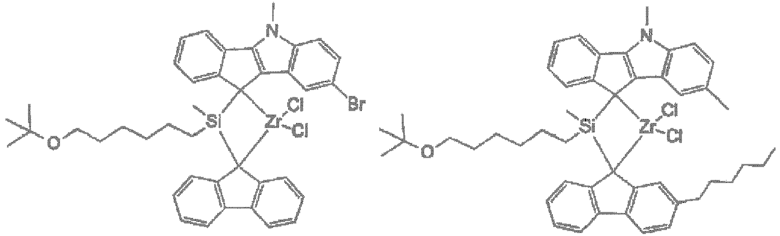

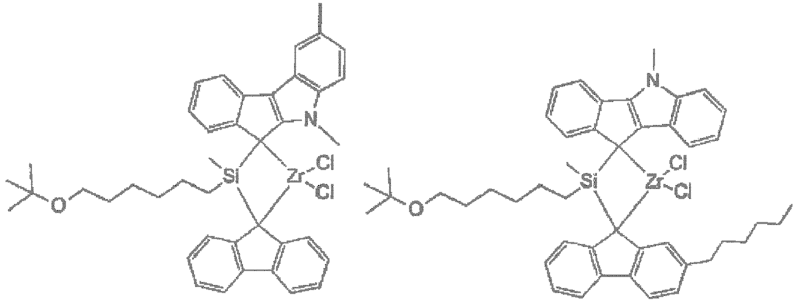

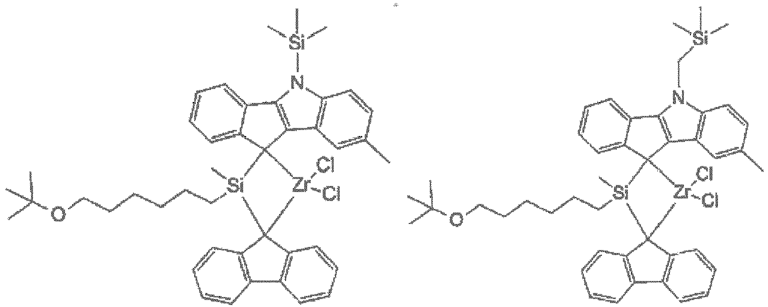

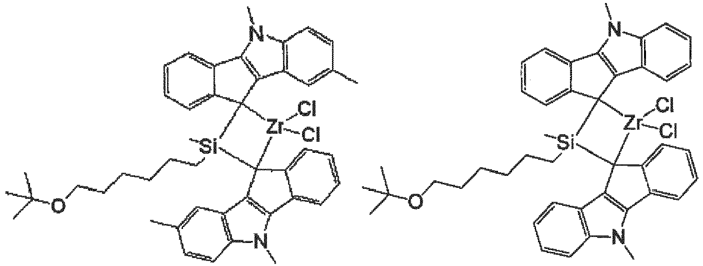

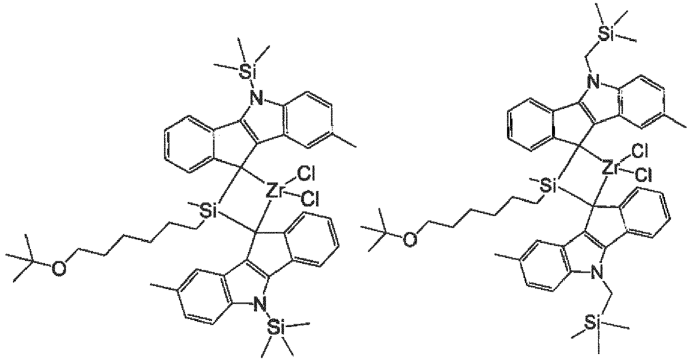

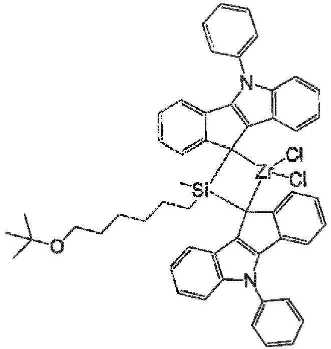

The above explained first metallocene compound of the Chemical Formula 1 has excellent activity and can polymerize high molecular weight polyolefin. Particularly, since it exhibits high polymerization activity even when supported in a carrier, it enables preparation of high molecular weight polyolefin.

And, even in case a polymerization reaction is progressed with hydrogen so as to prepare polyolefin having high molecular weight and simultaneously wide molecular weight distribution, the first metallocene compound according to the present invention exhibits low hydrogen reactivity, and thus, high molecular weight polyolefin may be polymerized with still high activity. Thus, even if used in a mixture with catalysts having other properties, polyolefin satisfying high molecular weight properties may be prepared without lowering of activity, and thus, polyolefin including high molecular weight olefin polymer and yet having wide molecular weight distribution may be easily prepared.

The first metallocene compound of the Chemical Formula 1 may be obtained by connecting an indenoindole derivative and/or a fluorene derivative by a bridge compound to prepare a ligand compound, and then, introducing a metal precursor compound to conduct metallation. The preparation method of the first metallocene compound will be concretely explained in examples described below.

Meanwhile, in the preparation method of polyolefin of the present invention, the metallocene supported catalyst may be a hybrid supported metallocene catalyst comprising one or more kind of the first metallocene compound represented by the Chemical Formula 1, one or more kind of the second metallocene compound, a cocatalyst compound and a carrier, wherein the second metallocene compound may be selected from the compounds represented by the following Chemical Formula 3 to Chemical Formula 5.

[Chemical Formula 3] (Cp¹R^{a})ₙ(Cp²R^{b})M¹Z¹₃₋ₙ

in the Chemical Formula 3,
M¹ is a Group 4 transition metal;
Cp¹ and Cp² are identical to or different from each other, and are each independently one selected from the group consisting of cyclopentadienyl, indenyl, 4,5,6,7-tetrahydro-1-indenyl, and fluorenyl radicals, which may be substituted with hydrocarbon having a carbon number of 1 to 20;
R^{a} and R^{b} are identical to or different from each other, and are each independently hydrogen, C1 to C20 alkyl, C1 to C10 alkoxy, C2 to C20 alkoxyalkyl, C6 to C20 aryl, C6 to C10 aryloxy, C2 to C20 alkenyl, C7 to C40 alkylaryl, C7 to C40 arylalkyl, C8 to C40 arylalkenyl, or C2 to C10 alkynyl;
Z¹ is a halogen atom, C1 to C20 alkyl, C2 to C10 alkenyl, C7 to C40 alkylaryl, C7 to C40 arylalkyl, C6 to C20 aryl, substituted or unsubstituted C1 to C20 alkylidene, substituted or unsubstituted amino group, C2 to C20 alkylalkoxy, or C7 to C40 arylalkoxy;
n is 1 or 0;

[Chemical Formula 4] (Cp³R^{c}) ₘB¹(Cp⁴R^{d})M²Z²₃₋ₘ

in the Chemical Formula 4,
M² is a Group 4 transition metal;
Cp³ and Cp⁴ are identical to or different from each other, and are each independently one selected from the group consisting of cyclopentadienyl, indenyl, 4,5,6,7-tetrahydro-1-indenyl, and fluorenyl radicals, which may be substituted with hydrocarbon having a carbon number of 1 to 20;
R^{c} and R^{d} are identical to or different from each other, and are each independently hydrogen, C1 to C20 alkyl, C1 to C10 alkoxy, C2 to C20 alkoxyalkyl, C6 to C20 aryl, C6 to C10 aryloxy, C2 to C20 alkenyl, C7 to C40 alkylaryl, C7 to C40 arylalkyl, C8 to C40 arylalkenyl, or C2 to C10 alkynyl;
Z² is a halogen atom, C1 to C20 alkyl, C2 to C10 alkenyl, C7 to C40 alkylaryl, C7 to C40 arylalkyl, C6 to C20 aryl, substituted or unsubstituted C1 to C20 alkylidene, substituted or unsubstituted amino group, C2 to C20 alkylalkoxy, or C7 to C40 arylalkoxy;
B¹ is one or more of carbon, germanium, silicon, phosphorus or nitrogen-containing radical, or a combination thereof, which crosslinks a Cp³R^{c} ring with a Cp⁴R^{d} ring, or crosslinks one Cp⁴R^{d} ring to M²;
m is 1 or 0;

[Chemical Formula 5] (Cp⁵R^{e})B²(J)M³Z³₂

in the Chemical Formula 5,
M³ is a Group 4 transition metal;
Cp⁵ is one selected from the group consisting of cyclopentadienyl, indenyl, 4,5,6,7-tetrahydro-1-indenyl and fluorenyl radicals, which may be substituted with hydrocarbon having a carbon number of 1 to 20;
R^{e} is hydrogen, C1 to C20 alkyl, C1 to C10 alkoxy, C2 to C20 alkoxyalkyl, C6 to C20 aryl, C6 to C10 aryloxy, C2 to C20 alkenyl, C7 to C40 alkylaryl, C7 to C40 arylalkyl, C8 to C40 arylalkenyl, or C2 to C10 alkynyl;
Z³ is a halogen atom, C1 to C20 alkyl, C2 to C10 alkenyl, C7 to C40 alkylaryl, C7 to C40 arylalkyl, C6 to C20 aryl, substituted or unsubstituted C1 to C20 alkylidene. substituted or unsubstituted amino group, C2 to C20 alkylalkoxy, or C7 to C40 arylalkoxy;
B² is one or more of carbon, germanium, silicon, phosphorus or nitrogen-containing radical or a combination thereof, which crosslinks a Cp⁵R^{e} ring with J; and
J is one selected from the group consisting of NR^{f}, O, PR^{f} and S, wherein R^{f} is C₁₋₂₀ alkyl, aryl, substituted alkyl, or substituted aryl.

In the Chemical Formula 4, in case m is 1, it means a bridge compound structure wherein a Cp³R^{c} ring and a Cp⁴R^{d} ring or a Cp⁴R^{d} ring and M² are crosslinked by B¹, and in case m is 0, it means a non-crosslinked compound structure.

The second metallocene compound represented by the Chemical Formula 3 may be, for example, a compound represented by one of the following structural formulae, but is not limited thereto.

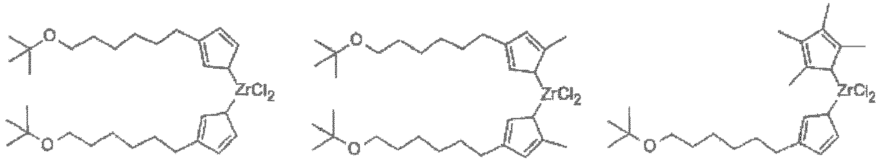

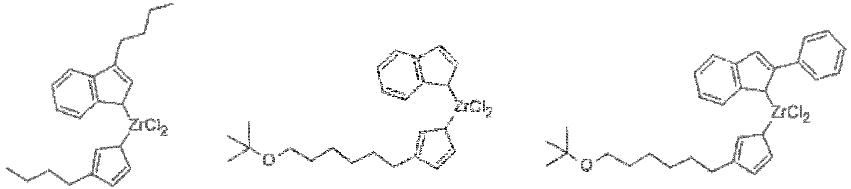

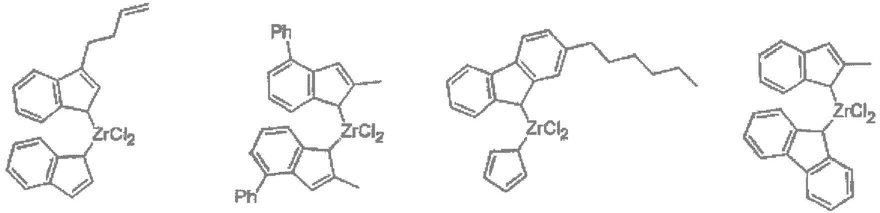

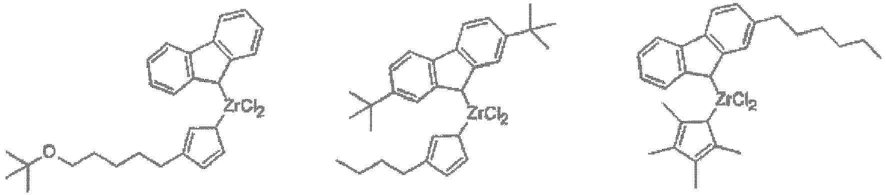

The second metallocene compound represented by the Chemical Formula 4 may be, for example, a compound represented by one of the following structural formulae, but is not limited thereto.

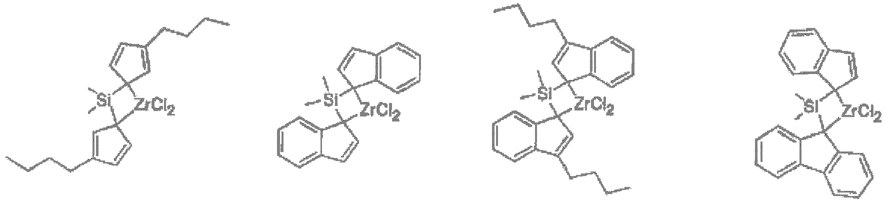

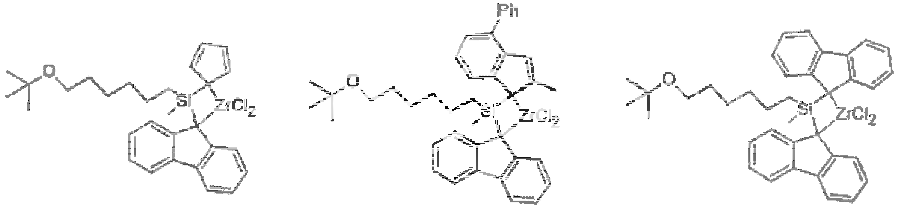

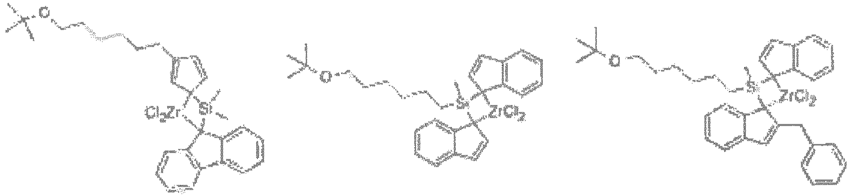

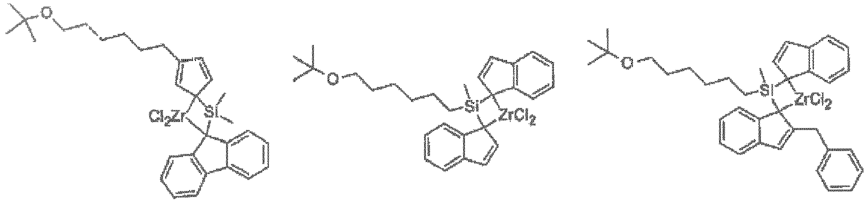

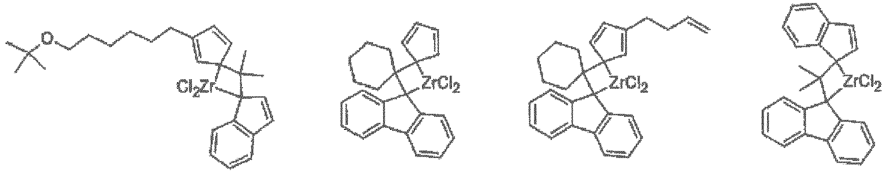

The second metallocene compound represented by the Chemical Formula 5 may be, for example, a compound represented by one of the following structural formulae, but is not limited thereto.

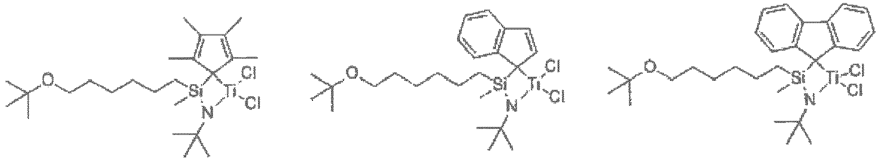

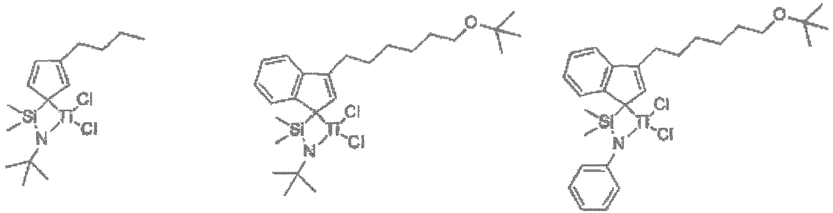

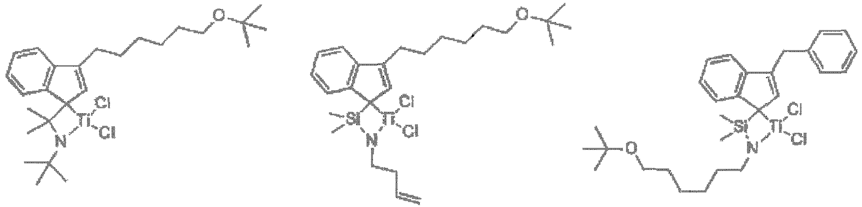

The hybrid supported metallocene catalyst may be those wherein one or more kind of the first metallocene compound represented by the Chemical Formula 1, and one or more kind of the second metallocene compound selected from the compounds represented by the Chemical Formulae 3 to 5 are supported in a carrier together with a cocatalyst compound.

The first metallocene compound represented by the Chemical Formula 1 of the hybrid supported metallocene catalyst mainly contributes to making high molecular weight copolymer having high branch content, and the second metallocene compound represented by the Chemical Formula 3 mainly contributes to making low molecular weight copolymer having low branch content. And, the second metallocene compound represented by the Chemical Formula 4 or 5 may contribute to making low molecular weight copolymer having medium branch content.

In the hybrid supported metallocene catalyst, the first metallocene compound forms a structure wherein an indeno indole derivative and/or a fluorene derivative are crosslinked by a bridge, and has a lone electron pair capable of acting as Lewis acid in the ligand structure, and thus, is supported on the surface of a carrier having Lewis acid property, thus exhibiting high polymerization activity even when supported. And, as it includes electron-rich indeno indole group and/or fluorenyl group, it has high activity, and due to appropriate steric hindrance and the electronic effect of the ligand, it has low hydrogen reactivity, and maintains high activity even when hydrogen exists. Thus, if a hybrid supported metallocene catalyst ire pared using such a transition metal compound, the nitrogen atom of the indeno indole derivative stabilizes beta-hydrogen of growing polymer chain by hydrogen bond, and thus, ultra high molecular weight olefin polymer may be polymerized.

And, since the hybrid supported metallocene catalyst of the present invention comprises the first metallocene compound represented by the Chemical Formula 1 and the second metallocene compound selected from the compounds represented by the Chemical Formulae 3 to 5, it comprises at least two different kinds of metallocene compounds, and thus, it may prepare high molecular weight olefin copolymer having high branch content, and simultaneously having wide molecular weight distribution and thus excellent properties and processibility.

In the supported metallocene catalyst according to the present invention, as the cocatalyst that is supported together with a carrier so as to activate the first and the second metallocene compounds, organic metal compounds including Group 13 metal may be used without specific limitations as long as it can be used when polymerizing olefin in the presence of a common metallocene catalyst.

According to one embodiment of the invention, the cocatalyst compound may comprise at least one of an aluminum-containing first cocatalyst of the following Chemical Formula 6, and a borate-based second cocatalyst of the following Chemical Formula 7.

[Chemical Formula 6] -[Al(R₁₈)-O-]ₖ-

in the Chemical Formula 6, R₁₈ are each independently halogen, a C1-20 hydrocarbyl group unsubstituted or substituted by halogen, and k is an integer of 2 or more,

[Chemical Formula 7] T⁺[BG₄]⁻

in the Chemical Formula 7, T⁺ is polyatomic ion having a valence of +1, B is boron in +3 oxidation state, and G's are each independently selected from the group consisting of hydride, dialkylamido, halide, alkoxide, aryloxide, hydrocarbyl, halocarbyl and halo-substituted hydrocarbyl, and G has 20 or less carbon, provided that G is halide in one or less position.

Due to the use of the first and second cocatalysts, the molecular weight distribution of the finally prepared polyolefin may become more uniform, and polymerization activity may be improved.

The first cocatalyst of the Chemical Formula 6 may be an alkyaluminoxane compound including repeat units bonded in a linear, circular or network shape, and specific examples thereof may include methylaluminoxane(MAO), ethylaluminoxane, isobutylaluminoxane, or butylaluminoxane, and the like.

And, the second cocatalyst of the Chemical Formula 7 may be a borate-based compound in the form of trisubstituted ammonium salt, dialkyl ammonium salt, or trisubstituted phosphonium salt. Specific examples of the second cocatalyst may include borate-based compounds in the form of tri-substituted ammonium salts, such as trimethylammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradecyclooctadecylammonium tetraphenylborate, N,N-dimethylanilinium tetraphenylborate, N,N-diethylanilinium tetraphenylborate, N,N-dimethyl(2,4,6-trimethylanilinium)tetraphenylborate, trimethylammonium tetrakis(pentafluorophenyl)borate, methylditetradecylammonium tetrakis(pentaphenyl)borate. methyldioctadecylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N-dimethyl(2,4,6-trimethylanilinium)tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate and N,N-dimethyl-(2,4,6-trimethylanilinium)tetrakis-(2,3,4,6-tetrafluorophenyl)borate; borate-based compounds in the form of dialkyl ammonium salts, such as dioctadecylammonium tetrakis(pentafluorophenyl)borate, ditetradecylammonium tetrakis(pentafluorophenyl)borate and dicyclohexylammonium tetrakis(pentafluorophenyl)borate; and borate-based compounds such as tri-substituted phosphonium salts, such as triphenylphosphonium tetrakis(pentafluorophenyl)borate, methyldioctadecylphosphonium tetrakis(pentafluorophenyl)borate and tri(2,6-dimethylphenyl)phosphonium tetrakis(pentafluorophenyl)borate.

In the hybrid supported metallocene catalyst, the mass ratio of total transition metal included in the first and second metallocene compounds to the carrier may be 1:10 to 1:1,000. When the carrier and the metallocene compounds are included in the above mass ratio, the optimum shape may be exhibited.

And, the mass ratio of the cocatalyst compound to the carrier may be 1:1 to 1:100. And, the mass ratio of the first and the second metallocene compounds may be 10:1 to 1:10, preferably 5:1 to 1;5. When the cocatalyst and the metallocene compounds are included in the above mass ratio, activity and polymer fine structure may be optimized.

In the preparation method of polyolefin, as the carrier, those containing hydroxyl groups on the surface may be used, and preferably, dried and surface moisture-removed carriers having highly reactive hydroxyl groups and siloxane groups may be used.

For example, silica, silica-alumina and silica-magnesia dried at high temperature may be used, and they may commonly contain oxide, carbonate, sulfate, and nitrate such as Na₂O, K₂CO₃, BaSO₄, and Mg(NO₃)₂.

The drying temperature of the carrier may be preferably 200 to 800 °C, more preferably 300 to 600°C, and most preferably 300 to 400°C. If the drying temperature of the carrier is less than 200°C, due to excessive moisture, surface moisture may react with the cocatalyst, and if it is greater than 800°C, pores on the carrier surface may be combined to reduce the surface area, and a lot of hydroxyl groups may be lost on the surface and only siloxane groups may remain, thus decreasing the reaction sites with the cocatalyst, which is not preferable.

The amount of the hydroxyl groups on the carrier surface may be preferably 0.1 to 10 mmol/g, more preferably 0.5 to 1 mmol/g. The amount of the hydroxyl groups on the carrier surface may be controlled by the preparation method and conditions of carrier, or drying conditions, for example, temperature, time, vacuum or spray drying.

If the amount of the hydroxyl groups are less than 0.1 mmol/g, the reaction sites with the cocatalyst may be little, and if it is greater than 10 mmol/g, there is a possibility of being derived from moisture other than hydroxyl groups on the carrier particle surface, which is not preferable.

In the hybrid supported metallocene catalyst, the mass ratio of total transition metals included in the first and second metallocene compounds : carrier may be about 1 : 10 to 1 : 1,000. When the carrier and the metallocene compounds are included in the above mass ratio, the optimum shape may be exhibited.

Meanwhile, in the preparation method of polyolefin according to one embodiment, olefin monomers may be polymerized to prepare polyolefin, if necessary, in the presence of hydrogen and/or a molecular weight control agent, in addition to the above explained supported metallocene catalyst.

According to one embodiment of the invention, the molecular weight control agent may include a mixture or a reaction product of a cyclopentadienyl metal compound of the following Chemical Formula 8, and an organic aluminum compound of the following Chemical Formula 9.

[Chemical Formula 8] Cp⁶Cp⁷M⁴X'₂

in the Chemical Formula 8,
Cp⁶ and Cp⁷ are each independently a ligand including a substituted or unsubstituted cyclopentadienyl group, a substituted or unsubstituted indenyl group, or a substituted or unsubstituted fluorenyl group, M' is a Group 4 transition metal, and X' is halogen;

[Chemical Formula 9] R^{f}R^{g}R^{h}A1

in the Chemical Formula 9,
R^{f}, R^{g} and R^{h} are each independently a C4-20 alkyl group or halogen, and at least one of R_{d}, Rₑ and R_{f} is a C4-20 alkyl group.

The above explained hybrid supported metallocene catalyst may be prepared by supporting a cocatalyst in a carrier, and additionally supporting the first and second metallocene compounds therein, and it may be prepared by selectively supporting the molecular weight control agent simultaneously with the first and second metallocene compounds, or before or after supporting the first and second metallocene compounds. The supporting method of each component follows common preparation process and conditions of supported metallocene catalysts, and the additional explanations thereof are omitted.

In a reactor including the above explained hybrid supported metallocene catalyst, and selectively, a molecular weight control agent, olefin monomers may be supplied to progress polymerization.

Wherein, according to one embodiment of the invention, olefin monomers may be supplied in the presence of hydrogen gas to progress polymerization.

Wherein, the hydrogen gas inhibits the rapid reaction of the metallocene catalyst at the initial stage of polymerization, and enables production of high molecular weight polyolefin in larger amount. Thus, due to the use of hydrogen gas, polyolefin having higher molecular weight and wide molecular weight distribution may be effectively obtained.

Meanwhile, in the reactor, on organic aluminum compound for removal of moisture in the reactor may be further introduced, and a polymerization reaction may be progressed in the presence of the same. Specific examples of the organic aluminum compound may include trialkylalunium, dialkyl aluminum halide, alkyl aluminum dihalide, aluminum dialkyl hydride or alkyl aluminum sesqui halide, and more specific examples thereof may include Al(C₂H₅)₃, Al(C₂H₅)₂H, Al(C₃H₇)₃, Al(C₃H₇)₂H, Al(i-C₄H₉)₂H, Al(C₈H₁₇)₃, Al(C₁₂H₂₅)₃, Al(C₂H₅)(C₁₂H₂₅)₂, Al(i-C₄H₉)(C₁₂H₂₅)₂, Al(i-C₄H₉)₂H, A1 (i-C₄H₉)₃, (C₂H₅)₂AlCl, (i-C₃H₉)₂AlCl or (C₂H₅)₃Al₂Cl₃. The organic aluminum compound may be continuously introduced into the reactor, and it may be introduced in the ratio of about 0.1 to 10 moles per 1kg of reaction medium introduced in the reactor so as to appropriately remove moisture.

Meanwhile, in the preparation method of polyolefin of one embodiment, the olefin monomer may be ethylene, alpha-olefin, cyclic olefin, dien olefin or triene olefin having two or more double bonds.

Specific examples of the olefin monomer may include ethylene, propylene, 1-butene, 1-pentene, 4-methly-1-pentene, 1-hexene, 1-heptene, 1-octene, 1-decene, 1-undecene, 1-dodecene, 1-tetradecene, 1-hexadecene, 1-eicosene, norbornene, norbornadiene, ethylidenenorbornene, phenylnorbornene, vinylnorbornene, dicyclopentadiene, 1,4-butadiene, 1,5-pentadiene, 1,6-hexadiene, styrene, alpha-methylstyrene, divinylbenzene, and 3-chloromethylstyrene, and two or more kinds of the monomers may be mixed and copolymerized.

One kind of olefin monomers may be homopolymerized or two or more kinds of monomers may be copolymerized using one continuous slurry polymerization reactor, loop slurry reactor, gas phase reactor or solution reactor.

The supported metallocene catalyst may be dissolved or diluted in aliphatic hydrocarbon solvents having a carbon number of 5 to 12, for example, pentane, hexane, heptanes, nonane, decane and isomers thereof, aromatic hydrocarbon solvents such as toluene, benzene, chlorine-substituted hydrocarbon solvents such as dichloromethane, chlorobenzene, and introduced. It is preferable that the solvent used is treated with a small amount of alkyl aluminum, thereby removing a small amount of water or air and the like, acting as a catalytic poison, and a cocatalyst may be further used.

The polyolefin obtained according to the preparation method of one embodiment, as explained, may be those wherein polydispersity index(PDI) is 15 to 30; melt flow rate ratio(MFR_{21.6}/MFR_{2.16}) is 200 to 400; and the content of long chain branch(LCB) having a carbon number of 8 or more per 1,000 main chain carbons is 2 or more.

Such a high molecular weight polyolefin has very wide molecular weight distribution, high long chain branch content and high molecular weight, thus manifesting excellent processibility, and exhibiting improved environmental stress crack resistance, and thus, may be very preferably used as a food container.

Hereinafter, the present invention will be explained in detail with reference to Examples. However, these examples may be modified in various forms, and the scope of the invention is not limited thereto.

### <Example>

### Preparation of a first metallocene compound

### Synthesis Example 1

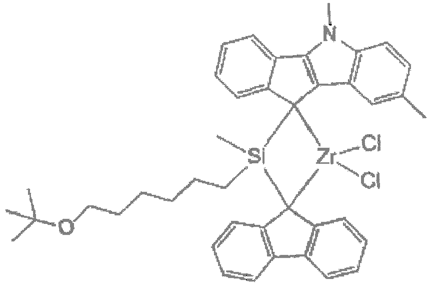

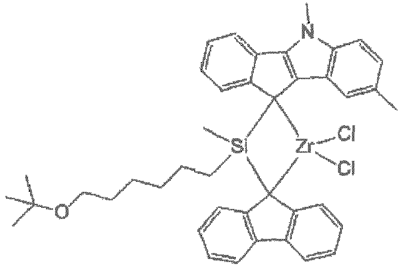

### 1-1 Preparation of a ligand compound

2 g of fluorene was dissolved in 5 mL MTBE, 100 mL hexane, 5.5 mL of n-BuLi, 2.5 M solution in hexane was added dropwise in a dry ice/acetone bath, and the solution was stirred at room temperature overnight. 3.6 g of (6-(tert-butoxy)hexyl)dichloro(methyl)silane was dissolved in 50 mL of hexane, the fluorene-Li slurry was transferred thereto for 30 minutes under a dry ice/acetone bath, and the solution was stirred at room temperature overnight Simultaneously, 5,8-dimethyl-5,10-dihydroindeno[1,2-b]indole (12 mmol, 2.8 g) was also dissolved in 60 mL of THF, 5.5 mL of n-BuLi, 2.5 M solution in hexane was added dropwise in a dry ice/acetone bath, and the solution was stirred at room temperature overnight. The reaction solution of fluorene and (6-(tert-butoxy)hexyl)dichloro(methyl)silane was NMR-sampled to confirm the completion of the reaction, and then, the 5,8-dimethyl-5,10-dihydroindeno[1,2-b]indole-Li solution was transferred thereto under a dry ice/acetone bath. The solution was stirred at room temperature overnight. After the reaction, the solution was extracted with ether/water, and the remaining moisture of the organic layer was removed with MgSO₄ to obtain a ligand compound (Mw 597.90, 12 mmol), and it was confirmed through 1H-NMR that two isomers were produced.
¹H NMR (500 MHz, d6-benzene): -0.30 ∼ -0.18 (3H, d), 0.40 (2H. m), 0.65 ∼ 1.45 (8H, m), 1.12 (9H, d), 2.36 - 2.40 (3H, d), 3.17 (2H, m), 3.41 ∼ 3.43 (3H, d), 4.17 ∼ 4.21 (1H, d), 4.34 ∼ 4.38 (1H, d), 6.90 ∼ 7.80 (15H, m)

### 1-2 Preparation of a metallocene compound

7.2 g (12 mmol) of the ligand compound synthesized in 1-1 was dissolved in 50 mL of diethylether 50 mL, 11.5 mL of n-BuLi, 2.5 M solution in hexane was added dropwise in a dry ice/acetone bath, and the solution was stirred at room temperature overnight. It was vacuum dried to obtain brown sticky oil. It was dissolved in toluene to obtain slurry. ZrCl₄(THF)₂ was prepared and 50 mL of toluene was added to prepare slurry. The 50 mL toluene slurry of ZrCl₄(THF)₂ was transferred in a dry ice/acetone bath. By stirring at room temperature overnight, it turned to violet. The reaction solution was filtered to remove LiCl. The filtrate was vacuum dried to remove toluene, and then, hexane was introduced and sonication was conducted for 1 hour. The slurry was filtered to obtain 6 g of filtered solid of a dark violet metallocene compound (Mw 758.02, 7.92 mmol, yield 66mol%). Two isomers were observed on 1H-NMR.
¹H NMR (500 MHz, CDCl₃): 1.19 (9H, d), 1.71 (3H, d), 1.50 ∼ 1.70(4H, m), 1.79(2H, m), 1.98 ∼ 2.19(4H, m), 2.58(3H, s), 3.38 (2H, m), 3.91 (3H, d), 6.66 ∼ 7.88 (15H, m)

### Synthesis Example 2

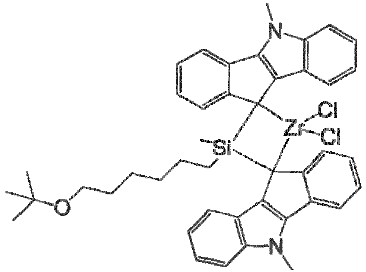

### 2-1 Synthesis of a ligand compound

Into a 250 mL flask, 2.63 g (12 mmol) of 5-methyl-5,10-dihydroindeno[1,2-b]indole was introduced, and dissolved in 50 mL of THF, and then, 6 mL of n-BuLi, 2.5M solution in hexane was added dropwise in a bath, and the solution was stirred at room temperature overnight. Into another 250 mL flask, 1.62 g(6 mmol) of (6-(tert-butoxy)hexyl)dichloro(methyl)silane was dissolved in 100 mL of hexane, and then, slowly added dropwise to the lithiated solution of 5-methyl-5,10-dihydroindeno[1,2-b]indole under a dry ice/acetone bath, and the solution was stirred at room temperature overnight. After the reaction, the solution was extracted with ether/water, and the remaining moisture of the organic layer was removed with MgSO₄, followed by vacuum drying to obtain 3.82 g (6 mmol) of a ligand compound, which was confirmed in 1H-NMR.
¹H NMR (500 MHz, CDCl3): -0.33 (3H, m), 0.86- 1.53 (10H, m), 1.16 (9H, d), 3.18 (2H, m), 4.07 (3H, d), 4.12 (3H, d), 4.17 (1H, d), 4.25 (1H, d), 6.95∼ 7.92 (16H, m)

### 2-2 Synthesis of a metallocene compound

3.82 g (6 mmol) of the ligand compound synthesized in 2-1 was dissolved in 100 mL of toluene and 5 mL of MTBE, and then, 5.6 mL(14 mmol) of n-BuLi, 2.5 M solution in hexane was added dropwise in a dryice/acetone bath, and the solution was stirred at room temperature overnight. Into another flask, 2.26 g (6 mmol) of ZrCl₄(THF)₂ was prepared, and 100 ml of toluene was introduced to prepare a slurry. The toluene slurry of ZrCl₄(THF)₂ was transferred to the lithigated ligand in a dry ice/acetone bath. The solution was stirred at room temperature overnight, and then, it turned to a violet color. The reaction solution was filtered to remove LiCl, and then, the obtained filtrate was vacuum dried, hexane was added, and sonication was conducted. The slurry was filtered to obtain 3.40 g of the filtered solid of a dark violet metallocene compound (yield 71.1mol%).
¹H NMR (500 MHz, CDC13): 1.74 (3H, d), 0.85∼2.33(10H, m), 1.29(9H, d), 3.87 (3H, s), 3.92 (3H, s), 3.36(2H, m), 6.48- 8.10 (16H, m)

### Preparation of a second metallocene compound

### Synthesis Example 3

### Synthesis of (tBu-O-(CH₂)₆)(CH₃)Si(C₅(CH₃)₄)(tBu-N)TiCl₂

50 g of Mg(s) was added to a 10L reactor at room temperature, and then, 300 mL of THF was added thereto. About 0.5 g of I₂ was added, and then, the temperature of the reactor was maintained at 50 °C. After the temperature of the reactor was stabilized, 250 g of 6-t-buthoxyhexyl chloride was added to the reactor at a speed of 5 mL/min using a feeding pump. It was observed that as 6-t-buthoxyhexyl chloride was added, the temperature of the reactor increased by about 4 to 5°C. While 6-t-buthoxyhexyl chloride was continuously added, the solution was stirred for 12 hours. After the reaction for 12 hours, a black reaction solution was obtained. 2 mL of the produced black solution was taken, water was added to obtain an organic layer, and 6-t-buthoxyhexane was confirmed by 1H-NMR. It could be seen from the 6-t-buthoxyhexane that a Grignard reaction progressed well. Thus, 6-t-buthoxyhexyl magnesium chloride was synthesized.

500 g of MeSiCl₃ and 1 L of THF were added to a reactor, and the reactor was cooled to -20°C. 560g of the synthesized 6-t-buthoxyhexyl magnesium chloride was added to the reactor at a speed of 5 mL/min using a feeding pump. After the feeding of Grignard reagent was completed, the solution was stirred for 12 hours while slowly raising the temperature of the reactor to room temperature. After the reaction for 12 hours, it was confirmed that white MgCl₂ salt was produced. 4 L of hexane was added, and salt was removed through labdori to obtain a filtered solution. The obtained filtered solution was added to a reactor, and hexane was removed at 70 °C to obtain light yellow liquid. It was confirmed through 1H-NMR that the obtained liquid was desired methyl(6-t-buthoxy hexyl)dichlorosilane.
1H-NMR (CDC13): 3.3 (t, 2H), 1.5 (m, 3H), 1.3 (m, 5H), 1.2 (s, 9H), 1.1 (m, 2H), 0.7 (s, 3H)
1.2 mol(150 g) of tetramethylcyclopentadiene and 2.4 L of THF were added to a reactor, and then, the reactor was cooled to -20°C. 480 mL of n-BuLi was added to the reactor at a speed of 5 mL/min using a feeding pump. After n-BuLi was added, the solution was stirred for 12 hours while slowly raising the temperature of the reactor to room temperature. After reaction for 12 hours, an equivalent of methyl(6-t-buthoxy hexyl)dichlorosilane) (326 g, 350 mL) was rapidly added to the reactor. The solution was stirred for 12 hours while slowly raising the temperature of the reactor to room temperature, and then, the reactor was cooled to 0°C again, and 2 equivalents of t-BuNH₂ was added. While slowly raising the temperature of the reactor to room temperature, the solution was stirred for 12 hours. After reaction for 12 hours, THF was removed, 4 L of hexane was added, and salts were removed through Labdori to obtain a filtered solution. The filtered solution was added to the reactor again, and then, hexane was removed at 70 °C to obtain a yellow solution. It was confirmed through 1H-NMR that the obtained yellow solution is methyl(6-t-buthoxyhexyl)(tetramethylCpH)t-butylaminosilane).

To the dilithium salt of ligand of -78°C synthesized from n-BuLi and ligand dimethyl(tetramethylCpH)t-butylaminosilane in a THF solution, TiCl₃(THF)₃(10 mmol) was rapidly added. The reaction solution was stirred for 12 hours while slowly raising the temperature from -78 °C to room temperature. After stirring for 12 hours, an equivalent of PbCl₂(10 mmol) was added to the reaction solution at room temperature, and the solution was stirred for 12 hours. After stirring for 12 hours, a bluish black solution was obtained. THF was removed in the produced reaction solution, and then, hexane was added to filter the product. After removing hexane in the obtained filtered solution, it was confirmed through 1H-NMR that desired methyl(6-t-buthoxyhexyl)silyl(η5-tetramethylCp)(t-Butylamido)]TiCl₂ of tBu-O-(CH₂)₆)(CH₃)Si(C₅(CH₃)₄)(tBu-N)TiCl₂ was obtained.
1H-NMR (CDCl₃): 3.3 (s, 4H), 2.2 (s, 6H), 2.1 (s, 6H), 1.8 ∼ 0.8 (m), 1.4 (s, 9H), 1.2(s, 9H), 0.7 (s, 3H)

### < Preparation Example of hybrid supported catalyst >

### Preparation Example 1

### 1-1 Drying of a carrier

Silica(manufactured by Grace Davison Company, SYLOPOL 948) was dehydrated while adding vacuum at 400 °C for 15 hours.

### 1-2 Preparation of a supported catalyst

10 g of the dried silica was introduced into a glass reactor, 100 mL of toluene was additionally introduced, and the solution was stirred. 50 mL of 10 wt% methylaluminoxane(MAO)/toluene solution was added, and the solution was slowly reacted with stirring at 40 °C. Thereafter, it was washed with a sufficient amount of toluene to remove unreacted aluminum compound, and the remaining toluene was removed by pressure reduction. Again, 100 mL of toluene was introduced, and then, 0.25 mmol of the metallocene catalyst prepared in the Synthesis Example 2 was dissolved in toluene and introduced, and the solution was reacted for 1 hour, and then, additionally reacted with 0.25 mmol of the metallocene catalyst of Synthesis Example 1 for 1 hour. After the reaction was completed, 0.25 mmol of the metallocene catalyst prepared in Synthesis Example 3 was dissolved in toluene and introduced, and then, the solution was additionally reacted for 1 hour. After the reaction was completed, stirring was stopped, the toluene layer was separated and removed, and then, 1.0 mmol of N, N-dimethylanilinium tetrakis(pentafluorophenyl)borate (AB) was introduced, and the solution was stirred for 1 hours, and then, toluene was removed by pressure reduction at 50°C, thus preparing a supported catalyst.

### Polyolefin polymerization

### Examples 1 and 2

The hybrid supported catalyst of Preparation Example 1 was introduced into a slurry polymerization process in a single reactor, thus preparing polyolefin according to an established method. As comonomer, 1-butene was used. Examples 1 and 2 were progressed while differing only in polymerization reaction time.

To the obtained polyolefin copolymer, 1,000 ppm of antioxidant(SONGNOX21B. SONGWON Industrial Co., Ltd.) and 1,500ppm of a processing aid(SC110, Ca-St, Duboon Yuhaw Inc.) were added, and pellet was extrusion molded at an extrusion temperature of 170 ∼ 220°C using a twin screw extruder(W&P Twin Screw Extruder, 75 pie, L/D = 36). The properties of the raw materials of polyolefin polymer and all the properties of the extrusion molded article were assessed according to property assessment method.

### Comparative Example 1

Polyolefin(Product name CAP508S3, Manufacturing Company: INEOS), a commercial product obtained using a Ziegler-Natta catalyst and two or more reactors connected in series, was prepared and extrusion molded by the same method as Example 1.

### Comparative Example 2

Polyolefin(Product name ME1000B2, Manufacturing Company: LG Chem), a commercial product obtained using a Ziegler-Natta catalyst and two or more reactors connected in series, was prepared and extrusion molded by the same method as Example 1.

### Experimental Example>

The properties of the polyolefins and the extrusion molded articles obtained in Examples and Comparative Examples were measured by the methods described below, and shown in the following Table 1.

And, the van Gurp-Palmen plots of the polyolefins obtained in Examples and Comparative Examples are shown in Fig. 1.
1) Density: ASTM 1505
2) Melt Index(MI, 2.16 kg/10min): measuring temperature 190 °C, ASTM 1238
3) Melt Index(MI, 21.6 kg/10min): measuring temperature 190 °C, ASTM 1238
4) Molecular weight, and molecular weight distribution: measuring temperature 160 °C. Number average molecular weight, weight average molecular weight and Z average molecular weight were measured using gel permeation chromatography-FRIR(GPC-FTIR). Molecular weight distribution was expressed as the ratio of weight average molecular weight and number average molecular weight.
5) Environmental stress crack resistance(ESCR)
   The time until F50 (50% destruction) was measured using 10% Igepal CO-630 Solution, at 50 °C temperature condition, according to ASTM D1693.
6) Branch content
   Polyolefin was dissolved in 1,2,4-trichlorobenzene containing 0.0125% BHT at 160°C for 10 hours using PL-SP260 for pretreatment, and then, the branch content (unit: number) per 1,000 carbons was measured at 160°C using PerkinElmer Spectrum 100 FT-IR.

**[Table 1]**

| | | Example 1 | Example 2 | Comparative Example 1 | Comparative Example 2 |
|---|---|---|---|---|---|
| Weight average molecular weight (g/mol) | | 203,400 | 194,200 | 165,600 | 110,900 |
| Polydispersity index(PDI) | | 19.37 | 19.23 | 15.62 | 10.87 |
| Branch/1,000C (unit: number) | C4(1-butene) branch | 2.6 | 3.0 | 0.8 | 0.9 |
| | C8(1-octene) or more branch I | 4.9 | 5.3 | 1.6 | 1.7 |
| Melt index(MI, 2.16 kg/10min) | | 0.25 | 0.35 | 0.89 | 1.75 |
| Melt flow rate ratio(MFR_{21.6}/MFR_{2.16}) | | 240 i | 280 | 70 | 50 |
| Density(g/cc) | | 0.949 | 0.949 | 0.952 | 0.951 |
| Environmental stress crack | | >250 | 250 | 50 | 100 |
| resistance(ESCR, hours) | | | | | |

Fig. 1 shows van Gurp-Palmen plots of the polyolefins according to Examples 1 and 2 of the present invention, and Comparative Examples 1 and 2.

Referring to the plots of Fig. 1, the polyolefins of Examples 1 and 2, due to the existence of high long chain branch(LCB), have a point of inflection in the region of high complex modulus, while the polyolefins of Comparative Examples 1 and 2 do not exhibit a point of inflection.

## Claims

1. A polyolefin, wherein polydispersity index(PDI) is 18 to 20, wherein the polydispersity index (PDI) is the ratio of weight average molecular weight and number average molecular weight, wherein weight average molecular weight and number average molecular weight are measured by GPC-FTIR at 160 °C;
melt flow rate ratio(MFR_{21.6}/MFR_{2.16}) is 200 to 400, wherein MFR_{21.6} and MFR_{2.16} are measured at 190°C according to ASTM 1238; and
the content of long chain branch(LCB) having a carbon number of 8 or more per 1,000 main chain carbons is 2 or more, wherein the content of long chain branch is measured as disclosed in the specification,
wherein density is 0.940 to 0.949 g/cc, wherein the density is measured according to ASTM 1505,
wherein the polyolefin is a copolymer of olefin monomer ethylene and alpha olefin comonomer.

2. The polyolefin according to claim 1, wherein the content of branch per 1,000 main chain is 4 or more, wherein the content of branch is measured as disclosed in the specification.

3. The polyolefin according to claim 1, wherein environmental stress crack resistance(ESCR) measured according to ASTM D 1693 is 150 hours or more.

4. The polyolefin according to claim 1, wherein melt index(MI) measured at 190°C under 2.16kg load condition according to ASTM 1238 is 0.1 to 0.9 g/10min.

5. The polyolefin according to claim 1, wherein weight average molecular weight(Mw) is 150,000 to 250,000 g/mol, wherein the weight average molecular weight is measured by GPC-FTIR at 160°C.

6. The polyolefin according to claim 1, wherein the polyolefin is prepared by polymerizing olefin monomers in the presence of a hybrid metallocene catalyst comprising one or more kind of a first metallocene compound represented by the following Chemical Formula 1, one or more kind of a second metallocene compound, and a cocatalyst: 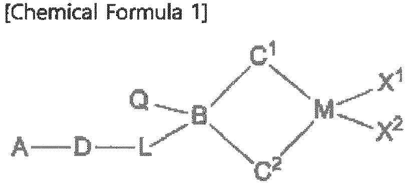 in the Chemical Formula 1,
A is hydrogen, halogen, a C1 to C20 alkyl group, a C2 to C20 alkenyl group, a C6 to C20 aryl group, a C7 to C20 alkylaryl group, a C7 to C20 arylalkyl group, a C1 to C20 alkoxy group, a C2 to C20 alkoxyalkyl group, a C3 to C20 heterocycloalkyl group, or a C5 to C20 heteroaryl group;
D is -O-, -S-, -N(R)- or -Si(R)(R')-, and R and R' are identical to or different from each other, and are each independently hydrogen, halogen, a C1 to C20 alkyl group, a C2 to C20 alkenyl group, or a C6 to C20 aryl group;
L is a C1 to C10 linear or branched alkylene group;
B is carbon, silicon or germanium;
Q is hydrogen, halogen, a C1 to C20 alkyl group, a C2 to C20 alkenyl group, a C6 to C20 aryl group, a C7 to C20 alkylaryl group, or a C7 to C20 arylalkyl group;
M is Group 4 transition metal;
X¹ and X² are identical to or different to each other, and are each independently halogen, a C1 to C20 alkyl group, a C2 to C20 alkenyl group, a C6 to C20 aryl group, a nitro group, an amido group, a C1 to C20 alkylsilyl group, a C1 to C20 alkoxy group, or a C1 to C20 sulfonate group;
C¹ and C² are identical to or different from each other, and are each independently represented by one of the following Chemical Formula 2a, Chemical Formula 2b or Chemical Formula 2c, provided that both C¹ and C² are not Chemical Formula 2c; 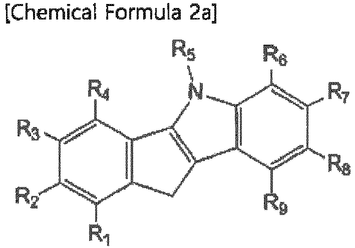 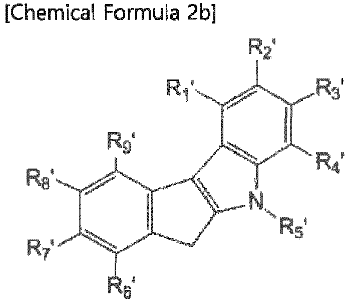 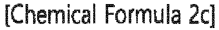 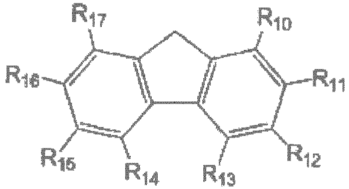
in the Chemical Formulae 2a, 2b and 2c,
R1 to R17 and R1' to R9' are identical to or different from each other, and are each independently hydrogen, halogen, a C1 to C20 alkyl group, a C2 to C20 alkenyl group, a C1 to C20 alkylsilyl group, a C1 to C20 silylalkyl group, a C1 to C20 alkoxysilyl group, a C1 to C20 alkoxy group, a C6 to C20 aryl group, a C7 to C20 alkylaryl group, or a C7 to C20 arylakyl group, and two or more neighboring groups of R10 to R17 may be connected to each other to form a substituted or unsubstituted aliphatic or aromatic ring.

7. The polyolefin according to claim 6, wherein the second metallocene compound is selected from the compounds represented by the following Chemical Formulae 3 to 5:
[Chemical Formula 3] (Cp¹R^{a})ₙ(Cp²R^{b})M¹Z¹₃₋ₙ
in the Chemical Formula 3,
M¹ is a Group 4 transition metal;
Cp¹ and Cp² are identical to or different from each other, and are each independently one selected from the group consisting of cyclopentadienyl, indenyl, 4,5,6,7-tetrahydro-1-indenyl, and fluorenyl radicals, which may be substituted with hydrocarbon having a carbon number of 1 to 20;
R^{a} and R^{b} are identical to or different from each other, and are each independently hydrogen, C1 to C20 alkyl, C1 to C10 alkoxy, C2 to C20 alkoxyalkyl, C6 to C20 aryl, C6 to C10 aryloxy, C2 to C20 alkenyl, C7 to C40 alkylaryl, C7 to C40 arylalkyl, C8 to C40 arylalkenyl, or C2 to C10 alkynyl;
Z¹ is a halogen atom, C1 to C20 alkyl, C2 to C10 alkenyl, C7 to C40 alkylaryl, C7 to C40 arylalkyl, C6 to C20 aryl, substituted or unsubstituted C1 to C20 alkylidene, substituted or unsubstituted amino group, C2 to C20 alkylalkoxy, or C7 to C40 arylalkoxy;
n is 1 or 0;
[Chemical Formula 4] (Cp³R^{c}) ₘB¹(Cp⁴R^{d})M²Z²₃₋ₘ
in the Chemical Formula 4,
M² is a Group 4 transition metal;
Cp³ and Cp⁴ are identical to or different from each other, and are each independently one selected from the group consisting of cydopentadienyl, indenyl, 4,5,6,7-tetrahydro-1-indenyl, and fluorenyl radicals, which may be substituted with hydrocarbon having a carbon number of 1 to 20;
R^{c} and R^{d} are identical to or different from each other, and are each independently hydrogen, C1 to C20 alkyl, C1 to C10 alkoxy, C2 to C20 alkoxyalkyl, C6 to C20 aryl, C6 to C10 aryloxy, C2 to C20 alkenyl, C7 to C40 alkylaryl, C7 to C40 arylalkyl, C8 to C40 arylalkenyl, or C2 to C10 alkynyl;
Z² is a halogen atom, C1 to C20 alkyl, C2 to C10 alkenyl, C7 to C40 alkylaryl, C7 to C40 arylalkyl, C6 to C20 aryl, substituted or unsubstituted C1 to C20 alkylidene, substituted or unsubstituted amino group, C2 to C20 alkylalkoxy, or C7 to C40 arylalkoxy;
B¹ is one or more of carbon, germanium, silicon, phosphorus or nitrogen-containing radical, or a combination thereof, which crosslinks a Cp³R^{c} ring with a Cp⁴R^{d} ring, or crosslinks one Cp⁴R^{d} ring to M²;
m is 1 or 0;
[Chemical Formula 5] (Cp⁵R^{e})B²(J)M³Z³₂
in the Chemical Formula 5,
M³ is a Group 4 transition metal;
Cp⁵ is one selected from the group consisting of cyclopentadienyl, indenyl, 4,5,6,7-tetrahydro-1-indenyl and fluorenyl radicals, which may be substituted with hydrocarbon having a carbon number of 1 to 20;
R^{e} is hydrogen, C1 to C20 alkyl, C1 to C10 alkoxy, C2 to C20 alkoxyalkyl, C6 to C20 aryl, C6 to C10 aryloxy, C2 to C20 alkenyl, C7 to C40 alkylaryl, C7 to C40 arylalkyl, C8 to C40 arylalkenyl, or C2 to C10 alkynyl;
Z³ is a halogen atom, C1 to C20 alkyl, C2 to C10 alkenyl, C7 to C40 alkylaryl, C7 to C40 arylalkyl, C6 to C20 aryl, substituted or unsubstituted C1 to C20 alkylidene, substituted or unsubstituted amino group, C2 to C20 alkylalkoxy, or C7 to C40 arylalkoxy;
B² is one or more of carbon, germanium, silicon, phosphorus or nitrogen-containing radical or a combination thereof, which crosslinks a Cp⁵R^{e} ring with J; and
J is one selected from the group consisting of NR^{f}, O, PR^{f} and S, wherein R^{f} is C₁₋₂₀ alkyl, aryl, substituted alkyl, or substituted aryl.

8. The polyolefin according to claim 6, wherein the metallocene compound represented by the Chemical Formula 1 is selected from the group consisting of the following Structural Formulae:

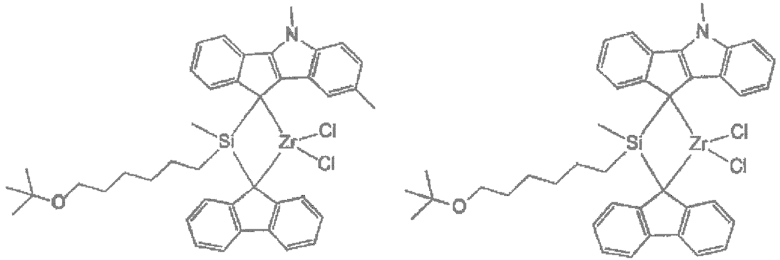

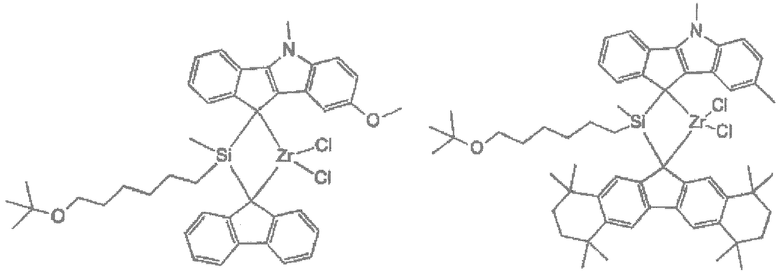

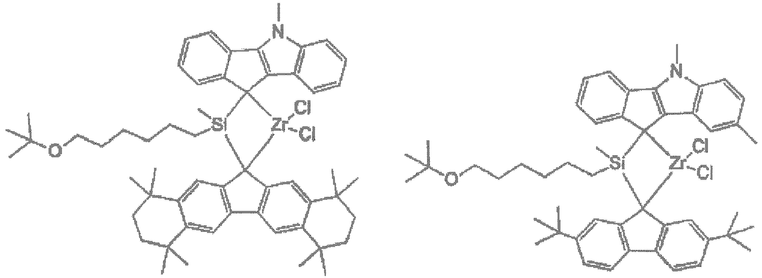

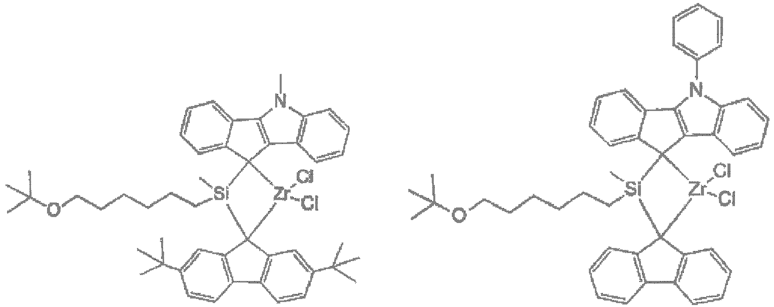

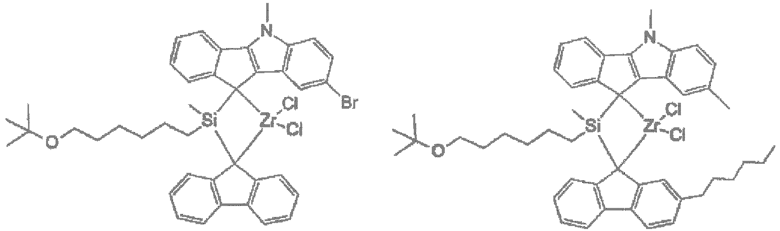

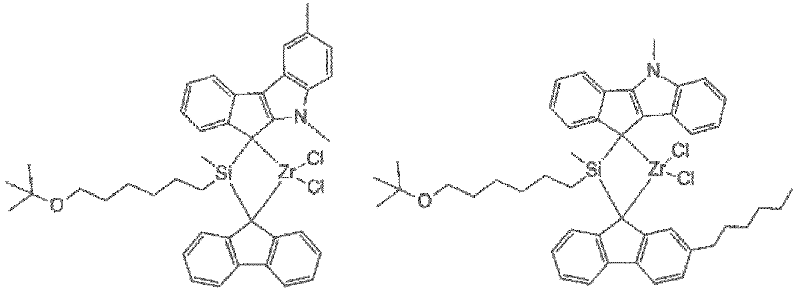

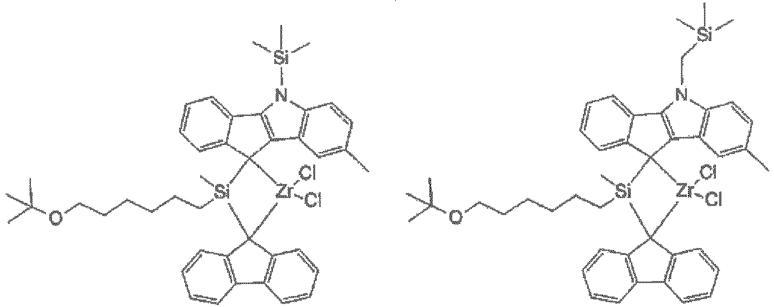

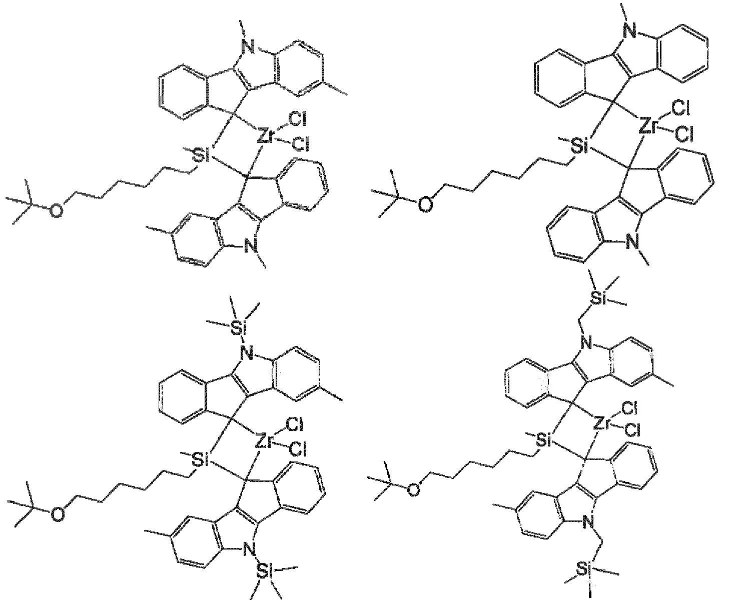

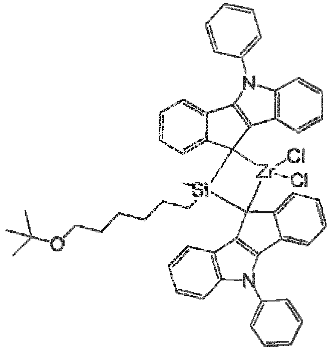

9. The polyolefin according to claim 6, wherein the metallocene compound is a hybrid supported metallocene catalyst comprising the first metallocene compound, the second metallocene compound and a cocatalyst, which are supported in a carrier.

10. The polyolefin according to claim 6, wherein the cocatalyst comprises an aluminum-containing first cocatalyst of the following Chemical Formula 6, and a borate-based second cocatalyst of the following Chemical Formula 7:
[Chemical Formula 6] -[Al(R₁₈)-O-]ₖ-
in the Chemical Formula 6, R₁₀ are each independently halogen, a C1-20 hydrocarbyl group unsubstituted or substituted by halogen, and k is an integer of 2 or more,
[Chemical Formula 7] T⁺[BG₄]⁻
in the Chemical Formula 7, T⁺ is polyatomic ion having a valence of +1, B is boron in +3 oxidation state, and G's are each independently selected from the group consisting of hydride, dialkylamido, halide, alkoxide, aryloxide, hydrocarbyl, halocarbyl and halo-substituted hydrocarbyl, and G has 20 or less carbon, provided that G is halide in one or less position.

11. The polyolefin according to claim 6, wherein the olefin monomer comprises one or more kind of monomer selected from the group consisting of ethylene, propylene, 1-butene, 1-hexene, 1-octene, 1-pentene, 4-methyl-1-pentene, 1-hexene, 1-heptene, 1-decene, 1-undecene, 1-dodecene, norbornene, and ethylidenenorbornene,.

12. The polyolefin according to claim 1, wherein the polyolefin is used as a food container or a bottle cap.

## Patentansprüche

1. Polyolefin, wobei ein Polydispersitätsindex (PDI) 18 bis 20 ist, wobei der Polydispersitätsindex (PDI) das Verhältnis von Gewichtsmittelmolekulargewicht und Zahlenmittelmolekulargewicht ist, wobei Gewichtsmittelmolekulargewicht und Zahlenmittelmolekulargewicht mittels GPC-FTIR bei 160°C gemessen werden;
Schmelzflussratenverhältnis (MFR_{21,6}/MFR_{2,16}) 200 bis 400 ist, wobei MFR_{21,6} und MFR_{2,16} bei 190°C gemäß ASTM 1238 gemessen werden; und
der Gehalt an Langkettenverzweigung (LCB) mit einer Kohlenstoffzahl von 8 oder mehr pro 1.000 Hauptkettenkohlenstoffen 2 oder höher ist, wobei der Gehalt an Langkettenverzweigung wie in der Beschreibung offenbart gemessen wird,
wobei Dichte 0,940 bis 0,949 g/cc ist, wobei die Dichte gemäß ASTM 1505 gemessen wird,
wobei das Polyolefin ein Copolymer aus Olefinmonomer Ethylen und alpha-Olefin-Comonomer ist.

2. Polyolefin nach Anspruch 1, wobei der Gehalt an Verzweigung pro 1.000 Hauptketten 4 oder höher ist, wobei der Gehalt an Verzweigung wie in der Beschreibung offenbart gemessen wird.

3. Polyolefin nach Anspruch 1, wobei umgebungsbeeinflusste Spannungsrissbildungsresistenz (ESCR), gemessen gemäß ASTM D 1693, 150 Stunden oder höher ist.

4. Polyolefin nach Anspruch 1, wobei Schmelzindex (MI), gemessen bei 190°C unter 2,16 kg Lastbedingung gemäß ASTM 1238, 0,1 bis 0,9 g/10 min ist.

5. Polyolefin nach Anspruch 1, wobei Gewichtsmittelmolekulargewicht (MW) 150.000 bis 250.000 g/mol ist, wobei das Gewichtsmittelmolekulargewicht mittels GPC-FTIR bei 160°C gemessen wird.

6. Polyolefin nach Anspruch 1, wobei das Polyolefin hergestellt wird durch Polymerisieren von Olefinmonomeren in der Gegenwart eines Hybridmetallocenkatalysators, der eine oder mehrere Arten einer ersten Metallocenverbindung, dargestellt durch die folgende chemische Formel 1, eine oder mehrere Arten einer zweiten Metallocenverbindung und einen Cokatalysator umfasst: 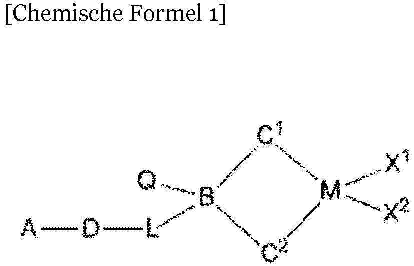 wobei in der chemischen Formel 1
A Wasserstoff, Halogen, eine C1- bis C20-Alkylgruppe, eine C2- bis C20-Alkenylgruppe, eine C6- bis C20-Arylgruppe, eine C7- bis C20-Alkylarylgruppe, eine C7- bis C20-Arylalkylgruppe, eine C1- bis C20-Alkoxygruppe, eine C2- bis C20-Alkoxyalkylgruppe, eine C3- bis C20-Heterocycloalkylgruppe oder eine C5-bis C20-Heteroarylgruppe ist;
D -O-, -S-, -N(R)- oder -Si(R)(R')- ist, und wobei R und R' gleich oder verschieden voneinander sind und jeweils unabhängig Wasserstoff, Halogen, eine C1- bis C20-Alkylgruppe, eine C2- bis C20-Alkenylgruppe oder eine C6- bis C20- Arylgruppe sind;
L eine lineare oder verzweigte C1- bis C10-Alkylengruppe ist;
B Kohlenstoff, Silicium oder Germanium ist;
Q Wasserstoff, Halogen, eine C1- bis C20-Alkylgruppe, eine C2- bis C20-Alkenylgruppe, eine C6- bis C20-Arylgruppe, eine C7- bis C20-Alkylarylgruppe oder eine C7- bis C20-Arylalkylggruppe ist;
M ein Übergangsmetall der Gruppe 4 ist;
X¹ und X² gleich oder verschieden voneinander sind und jeweils unabhängig Halogen, eine C1- bis C20-Alkylgruppe, eine C2- bis C20-Alkenylgruppe, eine C6- bis C20-Arylgruppe, eine Nitrogruppe, eine Amidogruppe, eine C1- bis C20-Alkylsilylgruppe, eine C1- bis C20-Alkoxygruppe oder eine C1- bis C20-Sulfonatgruppe sind;
C¹ und C² gleich oder verschieden voneinander sind und jeweils unabhängig dargestellt sind durch eine der folgenden chemischen Formel 2a, chemischen Formel 2b oder chemischen Formel 2c, vorausgesetzt, dass C¹ und C² nicht beide chemische Formel 2c sind; 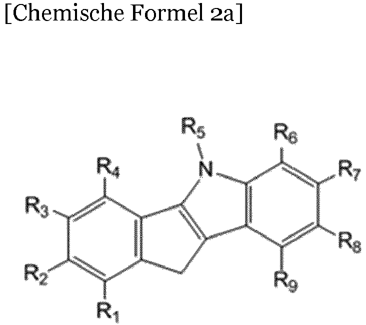 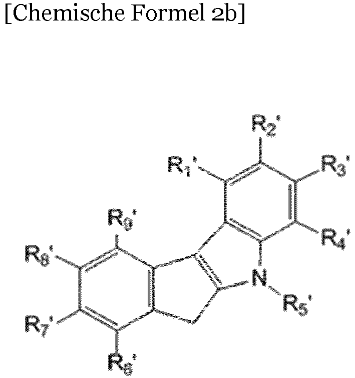 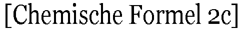 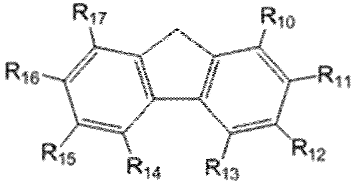
wobei in den chemischen Formeln 2a, 2b und 2c
R1 bis R17 und R1' bis R9' gleich oder verschieden voneinander sind und jeweils unabhängig Wasserstoff, Halogen, eine C1- bis C20-Alkylgruppe, eine C1- bis C20-Alkenylgruppe, eine C1- bis C20-Alkylsilylgruppe, eine C1- bis C20-Silylalkylgruppe, eine C1- bis C20-Alkoxysilylgruppe, eine C1- bis C20-Alkoxygruppe, eine C6- bis C20-Arylgruppe, eine C7- bis C20-Alkylarylgruppe oder eine C7- bis C20-Arylalkylgruppe sind, und wobei zwei oder mehrere benachbarte Gruppen von R10 bis R17 miteinander verbunden sein können, um einen substituierten oder unsubstituierten, aliphatischen oder aromatischen Ring zu bilden.

7. Polyolefin nach Anspruch 6, wobei die zweite Metallocenverbidnung ausgewählt ist aus den durch die folgenden chemischen Formeln 3 bis 5 dargestellten Verbindungen:
[Chemische Formel 3] (Cp¹R^{a})ₙ(Cp²R^{b})M¹Z¹₃₋ₙ
wobei in der chemischen Formel 3
M¹ ein Übergangsmetall der Gruppe 4 ist;
Cp¹ und Cp² gleich oder verschieden voneinander sind und jeweils unabhängig eines sind, ausgewählt aus der Gruppe bestehend aus Cyclopentadienyl-, Indenyl-, 4,5,6,7-Tetrahydro-i-indenyl- und Fluorenyl-Resten, die mit Kohlenwasserstoff mit einer Kohlenstoffzahl von 1 bis 20 substituiert sein können;
R^{a} und R^{b} gleich oder verschieden voneinander sind und jeweils unabhängig Wasserstoff, C1- bis C20-Alkyl, C1- bis C10-Alkoxy, C2- bis C20-Alkoxyalkyl, C6- bis C20-Aryl, C6- bis C10-Aryloxy, C2- bis C20-Alkenyl, C7- bis C40-Alkylaryl, C7- bis C40-Arylalkyl, C8- bis C40-Arylalkenyl oder C2- bis C10-Alkinyl sind;
Z¹ ein Halogenatom, C1- bis C20-Alkyl, C2- bis C10-Alkenyl, C7- bis C40-Alkylaryl, C7- bis C40-Arylalkyl, C6- bis C20-Aryl, substituiertes oder unsubstituiertes C1- bis C20-Alkyliden, substituierte oder unsubstituierte Aminogruppe, C2- bis C20-Alkylalkoxy oder C7- bis C40-Arylalkoxy ist;
n 1 oder o ist;
[Chemische Formel 4] (Cp³R^{c})ₘB¹(Cp⁴R^{d})M²Z² ₃₋ₘ
wobei in der chemischen Formel 4
M² ein Übergangsmetall der Gruppe 4 ist;
Cp³ und Cp⁴ gleich oder verschieden voneinander sind und jeweils unabhängig eines sind, ausgewählt aus der Gruppe bestehend aus Cyclopentadienyl-, Indenyl-, 4,5,6,7-Tetryhydro-1-indenyl- und Fluorenyl-Resten, die mit Kohlenwasserstoff mit einer Kohlenstoffzahl von 1 bis 20 substituiert sein können;
R^{c} und R^{d} gleich oder verschieden voneinander sind und jeweils unabhängig Wasserstoff, C1-bis C20-Alkyl, C1- bis C10-Alkoxy, C2- bis C20-Alkoxyalkyl, C6-bis C20-Aryl, C6- bis C10-Aryloxy, C2- bis C20-Alkenyl, C7- bis C40-Alkylaryl, C7- bis C40-Arylalkyl, C8- bis C40-Arylalkenyl oder C2- bis C10-Alkinyl sind;
Z² ein Halogenatom, C1- bis C20-Alkyl, C2- bis C10-Alkenyl, C7- bis C40-Alkylaryl, C7 bis C40-Arylalkyl-, C6- bis C20-Aryl, substituiertes oder unsubstituiertes C1- bis C20-Alkyliden, substituierte oder unsubstituierte Aminogruppe, C2- bis C20-Alkylalkoxy oder C7- bis C40-Arylalkoxy ist;
B¹ eines oder mehrere von Kohlenstoff-, Germanium-, Silizium-, Phosphor- oder Stickstoff- enthaltendem Rest ist, oder eine Kombination derselben, welches einenCp³R^{c}-Ring mit einem Cp⁴R^{d}-Ring verknüpft oder einen Cp⁴R^{d}-Ring mit M² verknüpft;
m 1 oder 0 ist;
[Chemische Formel 5] (Cp⁵R^{e})B²(J)M³Z³₂
wobei in der chemischen Formel 5
M³ ein Übergangsmetall der Gruppe 4 ist;
Cp⁵ eines ist, ausgewählt aus der Gruppe bestehend aus Cyclopentadienyl-, Indenyl-, 4,5,6,7-Tetrahydro-1-indenyl- und Fluorenyl-Resten, die mit Kohlenwasserstoff mit einer Kohlenstoffzahl von 1 bis 20 substituiert sein können;
R^{e} Wasserstoff, C1- bis C20-Alkyl, C1-bis C10-Alkoxy, C2- bis C20-Alkoxyalkyl, C6- bis C20-Aryl, C6- bis C10-Aryloxy, C2- bis C20-Alkenyl, C7- bis C40-Alkylaryl, C7- bis C40-Arylalkyl, C8- bis C40-Arylalkenyl oder C2- bis C10-Alkinyl ist;
Z³ ein Halogenatom, C1- bis C20-Alkyl, C2- bis C10-Alkenyl, C7- bis C40-Alkylaryl, C7- bis C40-Arylalkyl, C6- bis C20-Aryl, substituiertes oder unsubsituiertes C1- bis C20-Alkyliden, substituierte oder unsubstituierte Aminogruppe, C2- bis C20-Alkylalkoxy oder C7- bis C40 Arylalkoxy ist;
B² eines oder mehrere von Kohlenstoff-, Germanium-, Silizium-, Phosphor-, oder Stickstoff-enthaltendem Rest oder eine Kombination derselben ist, welches einen Cp⁵R^{e}-Ring mit J verknüpft; und
J eines ist, ausgewählt aus der Gruppe bestehend aus NR^{f}, O, PR^{f} und S, wobei R^{f} C₁₋₂₀-Alkyl, Aryl, substituiertes Alkyl oder substituiertes Aryl ist.

8. Polyolefin nach Anspruch 6, wobei die durch chemische Formel 1 dargestellte Metallocenverbindung ausgewählt ist aus der Gruppe bestehend aus den folgenden Strukturformeln:

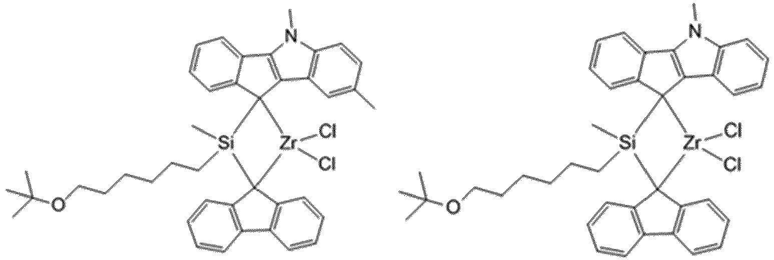

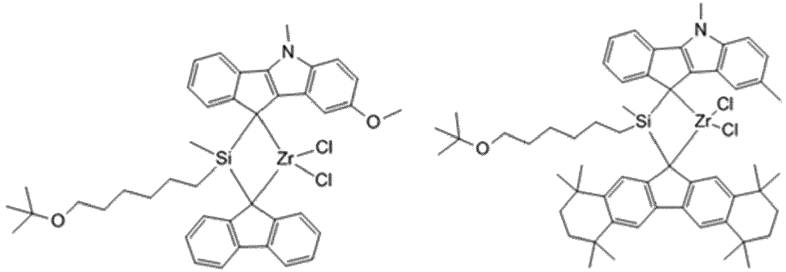

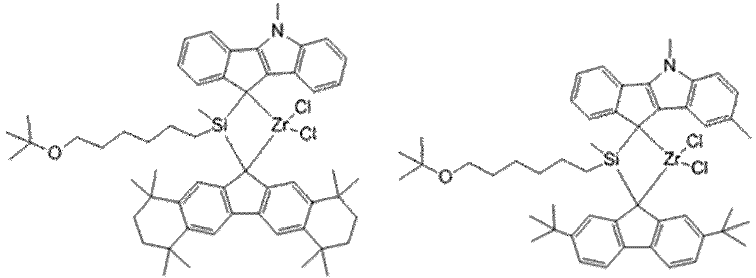

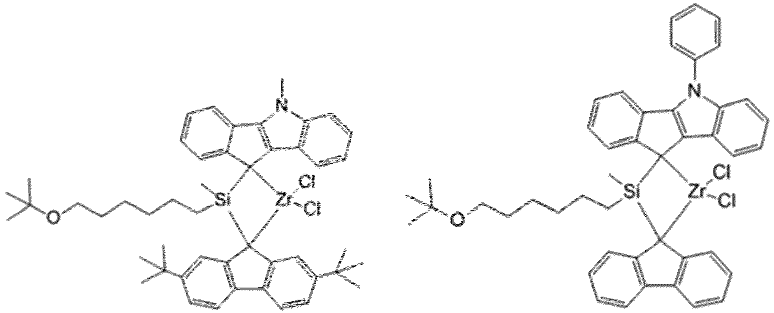

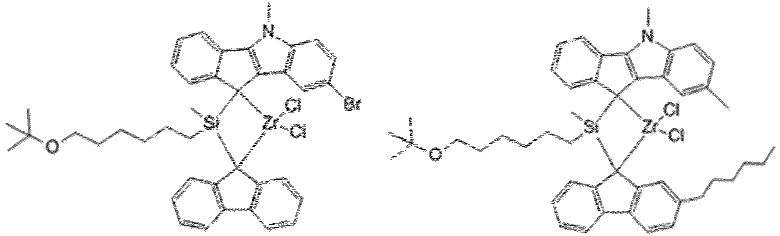

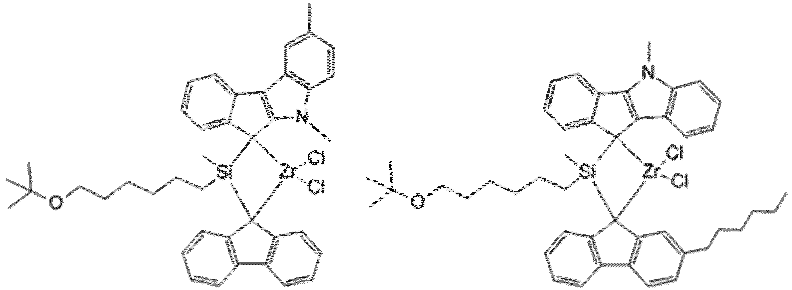

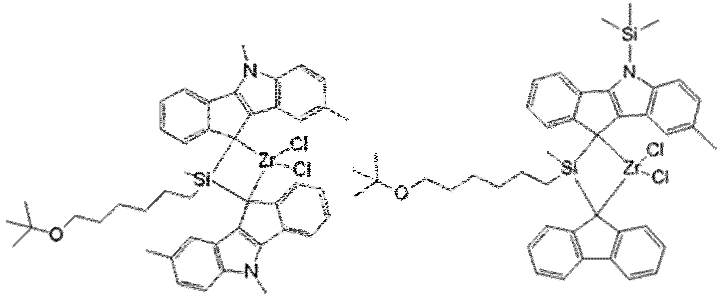

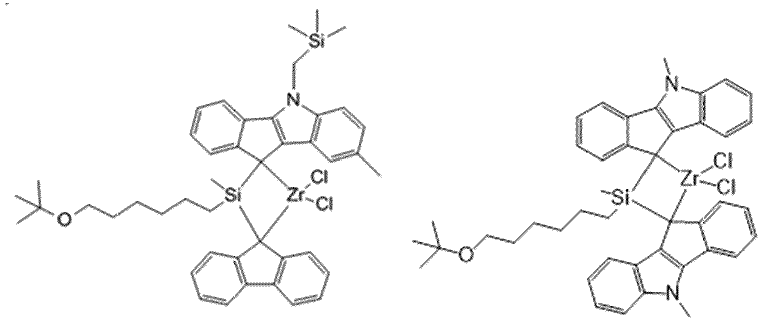

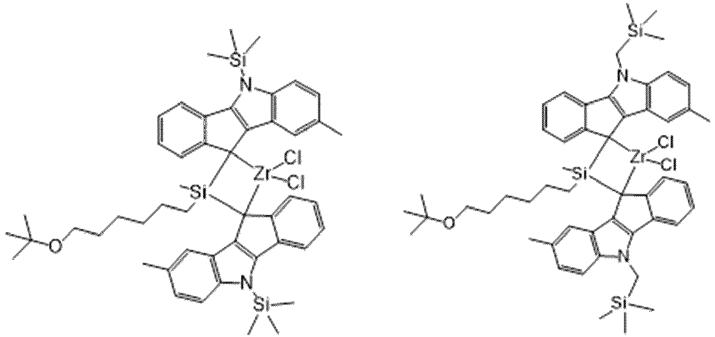

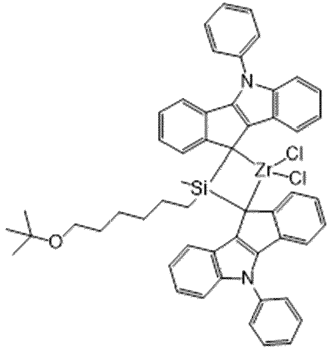

9. Polyolefin nach Anspruch 6, wobei die Metallocenverbindung ein geträgerter Hybridmetallocenkatalysator ist, der die erste Metallocenverbindung, die zweite Metallocenverbindung und einen Cokatalysator umfasst, welche in einem Träger geträgert sind.

10. Polyolefin nach Anspruch 6, wobei der Cokatalysator einen Aluminiumenthaltenden ersten Cokatalysator der folgenden chemischen Formel 6 und einen zweiten Cokatalysator auf Boratbasis der folgenden chemischen Formel 7 umfasst:
[Chemische Formel 6] -[Al(R₁₈)-O-]ₖ-
wobei in der chemischen Formel 6 R₁₈ jeweils unabhängig Halogen, eine C1-20-Hydrocarbylgruppe, unsubstituiert oder substituiert mit Halogen ist, und k eine ganze Zahl von 2 oder höher ist,
[Chemische Formel 7] T⁺[BG₄]⁻
wobei in der chemischen Formel 7 T⁺ ein mehratomiges Ion mit einer Valenz von +1 ist, B Bor in einer Oxidationsstufe +3 ist und G jeweils unabhängig ausgewählt ist aus der Gruppe bestehend aus Hydrid, Dialkylamido, Halogenid, Alkoxid, Aryloxid, Hydrocarbyl, Halogencarbyl und Halogen-substituiertem Hydrocarbyl, und wobei G 20 oder weniger Kohlenstoffe aufweist, vorausgesetzt, dass G in einer oder weniger Positionen Halogenid ist.

11. Polyolefin nach Anspruch 6, wobei das Olefinmonomer eine oder mehrere Arten von Monomer umfasst, ausgewählt aus der Gruppe bestehend aus Ethylen, Propylen, 1-Buten, 1-Hexen, 1-Octen, 1-Penten, 4-Methyl-1-penten, 1-Hexen, 1-Hepten, 1-Decen, 1-Undecen, 1-Dodecen, Norbornen und Ethylidennorbornen.

12. Polyolefin nach Anspruch 1, wobei das Polyolefin als ein Lebensmittelbehälter oder eine Flaschenverschlusskappe verwendet wird.

## Revendications

1. Polyoléfine, dans laquelle l'indice de polydispersité (PDI) est compris entre 18 et 20, dans laquelle l'indice de polydispersité (PDI) est le rapport de la masse moléculaire moyenne en poids et de la masse moléculaire moyenne en nombre, dans laquelle la masse moléculaire moyenne en poids et la masse moléculaire moyenne en nombre sont mesurées par GPC-FTIR à 160°C ;
le rapport d'indice de fluidité (MFR_{21,6}/MFR_{2,16}) est compris entre 200 et 400, dans laquelle MFR_{21,6} et MFR_{2,16} sont mesurés à 190°C selon ASTM 1238 ; et
la teneur en ramification à longue chaîne (LCB) ayant un nombre de carbone de 8 ou plus pour 1000 carbones de chaîne principale est 2 ou plus, dans laquelle la teneur en ramification à longue chaîne est mesurée comme indiqué dans la spécification,
dans laquelle la densité est comprise entre 0,940 et 0,949 g/cc, dans laquelle la densité est mesurée selon ASTM 1505,
dans laquelle la polyoléfine est un copolymère de monomère d'oléfine éthylène et comonomère d'alpha-oléfine.

2. Polyoléfine selon la revendication 1, dans laquelle la teneur en ramification pour 1000 carbones de chaîne principale est 4 ou plus, dans laquelle la teneur en ramification est mesurée comme indiqué dans la spécification.

3. Polyoléfine selon la revendication 1, dans laquelle la résistance à la fissuration sous contrainte dans un environnement donné (ESCR) mesurée selon ASTM D 1693 est 150 heures ou plus.

4. Polyoléfine selon la revendication 1, dans laquelle l'indice de fluidité (MI) mesuré à 190°C sous condition de charge de 2,16 kg selon ASTM 1238 est compris entre 0,1 et 0,9 g/10 min.

5. Polyoléfine selon la revendication 1, dans laquelle la masse moléculaire moyenne en poids (Mw) est comprise entre 150 000 et 250 000 g/mol, dans laquelle la masse moléculaire moyenne en poids est mesurée par GPC-FTIR à 160°C.

6. Polyoléfine selon la revendication 1, dans laquelle la polyoléfine est préparée en polymérisant des monomères d'oléfine en présence d'un catalyseur métallocène hybride comprenant une ou plusieurs sortes d'un premier composé de métallocène représenté par la Formule chimique 1, une ou plusieurs sortes d'un deuxième composé de métallocène et un cocatalyseur : 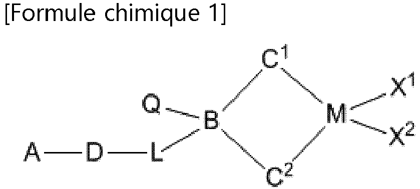 dans la Formule chimique 1,
A est un hydrogène, un halogène, un groupe alkyle en C1 à C20, un groupe alkényle en C2 à C20, un groupe aryle en C6 à C20, un groupe alkylaryle en C7 à C20, un groupe arylalkyle en C7 à C20, un groupe alkoxy en C1 à C20, un groupe alkoxyalkyle en C2 à C20, un groupe hétérocycloalkyle en C3 à C20 ou un groupe hétéroaryle en C5 à C20 ;
D est -O-, -S-, -N(R)- ou -Si(R)(R')-, et R et R' sont identiques ou différents l'un de l'autre, et sont chacun indépendamment un hydrogène, un halogène, un groupe alkyle en C1 à C20, un groupe alkényle en C2 à C20 ou un groupe aryle en C6 à C20 ;
L est un groupe alkylène en C1 à C10 linéaire ou ramifié ;
B est un carbone, un silicium ou un germanium ;
Q est un hydrogène, un halogène, un groupe alkyle en C1 à C20, un groupe alkényle en C2 à C20, un groupe aryle en C6 à C20, un groupe alkylaryle en C7 à C20 ou un groupe arylalkyle en C7 à C20 ;
M est un métal de transition du groupe 4 ;
X¹ et X² sont identiques ou différents l'un de l'autre, et sont chacun indépendamment un halogène, un groupe alkyle en C1 à C20, un groupe alkényle en C2 à C20, un groupe aryle en C6 à C20, un groupe nitro, un groupe amido, un groupe alkylsilyle en C1 à C20, un groupe alkoxy en C1 à C20 ou un groupe sulfonate en C1 à C20 ;
C¹ et C² sont identiques ou différents l'un de l'autre, et sont chacun indépendamment représentés par soit la Formule chimique 2a, la Formule chimique 2b ou la Formule chimique 2c, à condition qu'à la fois C¹ et C² ne soient pas la Formule chimique 2c ; 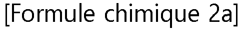 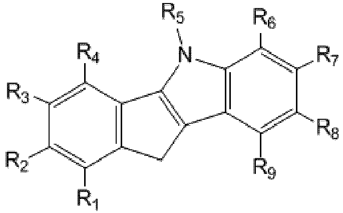 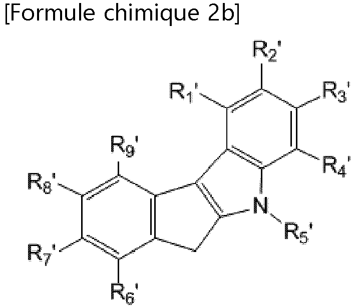 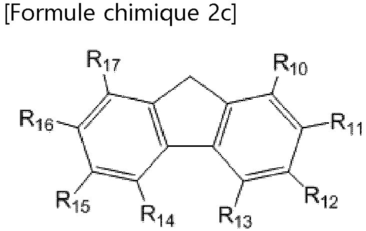
dans les Formules chimiques 2a, 2b et 2c,
R1 à R17 et R1' à R9' sont identiques ou différents l'un de l'autre, et sont chacun indépendamment un hydrogène, un halogène, un groupe alkyle en C1 à C20, un groupe alkényle en C2 à C20, un groupe alkylsilyle en C1 à C20, un groupe silylalkyle en C1 à C20, un groupe alkoxysilyle en C1 à C20, un groupe alkoxy en C1 à C20, un groupe aryle en C6 à C20, un groupe alkylaryle en C7 à C20 ou un groupe arylalkyle en C7 à C20, et deux ou plus de deux groupes voisins de R10 à R17 peuvent être reliés l'un à l'autre pour former un cycle aliphatique ou aromatique substitué ou non substitué.

7. Polyoléfine selon la revendication 6, dans laquelle le deuxième composé de métallocène est sélectionné parmi les composés représentés par les Formules chimiques 3 à 5 :
[Formule chimique 3] (Cp¹R^{a})ₙ(Cp²R^{b})M¹Z¹₃₋ₙ
dans la Formule chimique 3,
M¹ est un métal de transition du groupe 4 ;
Cp¹ et Cp² sont identiques ou différents l'un de l'autre, et sont chacun indépendamment un élément sélectionné dans le groupe constitué de radicaux de cyclopentadiényle, indényle, 4,5,6,7-tétrahydro-1-indényle et fluorényle, qui peuvent être substitués par un hydrocarbure ayant un nombre de carbone de 1 à 20 ;
R^{a} et R^{b} sont identiques ou différents l'un de l'autre, et sont chacun indépendamment un hydrogène, un alkyle en C1 à C20, un alkoxy en C1 à C10, un alkoxyalkyle en C2 à C20, un aryle en C6 à C20, un aryloxy en C6 à C10, un alkényle en C2 à C20, un alkylaryle en C7 à C40, un arylalkyle en C7 à C40, un arylalkényle en C8 à C40 ou un alkynyle en C2 à C10 ;
Z¹ est un atome d'halogène, un alkyle en C1 à C20, un alkényle en C2 à C10, un alkylaryle en C7 à C40, un arylalkyle en C7 à C40, un aryle en C6 à C20, un groupe alkylidène en C1 à C20 substitué ou non substitué, un groupe amino substitué ou non substitué, un alkylalkoxy en C2 à C20 ou un arylalkoxy en C7 à C40 ;
n est 1 ou 0 ;
[Formule chimique 4] (Cp³R^{c}) ₘB¹(Cp⁴R^{d})M²Z²₃₋ₘ
dans la Formule chimique 4,
M² est un métal de transition du groupe 4 ;
Cp³ et Cp⁴ sont identiques ou différents l'un de l'autre, et sont chacun indépendamment un élément sélectionné dans le groupe constitué de radicaux de cyclopentadiényle, indényle, 4,5,6,7-tétrahydro-1-indényle et fluorényle, qui peuvent être substitués par un hydrocarbure ayant un nombre de carbone de 1 à 20 ;
R^{c} et R^{d} sont identiques ou différents l'un de l'autre, et sont chacun indépendamment un hydrogène, un alkyle en C1 à C20, un alkoxy en C1 à C10, un alkoxyalkyle en C2 à C20, un aryle en C6 à C20, un aryloxy en C6 à C10, un alkényle en C2 à C20, un alkylaryle en C7 à C40, un arylalkyle en C7 à C40, un arylalkényle en C8 à C40 ou un alkynyle en C2 à C10 ;
Z² est un atome d'halogène, un alkyle en C1 à C20, un alkényle en C2 à C10, un alkylaryle en C7 à C40, un arylalkyle en C7 à C40, un aryle en C6 à C20, un groupe alkylidène en C1 à C20 substitué ou non substitué, un groupe amino substitué ou non substitué, un alkylalkoxy en C2 à C20 ou un arylalkoxy en C7 à C40 ;
B¹ est un ou plusieurs radicaux contenant un atome de carbone, de germanium, de silicium, de phosphore ou d'azote, ou une combinaison de ces derniers, qui réticulent un cycle Cp³R^{c} et un cycle Cp⁴R^{d} ou réticulent un cycle Cp⁴R^{d} à M² ;
m est 1 ou 0 ;
[Formule chimique 5] (Cp⁵R^{e})B²(J)M³Z³₂
dans la Formule chimique 5,
M³ est un métal de transition du groupe 4 ;
Cp⁵ est un élément sélectionné dans le groupe constitué de radicaux de cyclopentadiényle, indényle, 4,5,6,7-tétrahydro-1-indényle et fluorényle, qui peuvent être substitués par un hydrocarbure ayant un nombre de carbone de 1 à 20 ;
R^{e} est un hydrogène, un alkyle en C1 à C20, un alkoxy en C1 à C10, un alkoxyalkyle en C2 à C20, un aryle en C6 à C20, un aryloxy en C6 à C10, un alkényle en C2 à C20, un alkylaryle en C7 à C40, un arylalkyle en C7 à C40, un arylalkényle en C8 à C40 ou un alkynyle en C2 à C10 ;
Z³ est un atome d'halogène, un alkyle en C1 à C20, un alkényle en C2 à C10, un alkylaryle en C7 à C40, un arylalkyle en C7 à C40, un aryle en C6 à C20, un groupe alkylidène en C1 à C20 substitué ou non substitué, un groupe amino substitué ou non substitué, un alkylalkoxy en C2 à C20 ou un arylalkoxy en C7 à C40 ;
B² est un ou plusieurs radicaux contenant un atome de carbone, de germanium, de silicium, de phosphore ou d'azote ou une combinaison de ces derniers, qui réticulent un cycle Cp⁵R^{e} avec J ; et
J est un élément sélectionné dans le groupe constitué de NR^{f}, O, PR^{f} et S, dans laquelle R^{f} est un alkyle en C₁₋₂₀, un aryle, un alkyle substitué ou un aryle substitué.

8. Polyoléfine selon la revendication 6, dans laquelle le composé de métallocène représenté par la Formule chimique 1 est sélectionné dans le groupe constitué des Formules structurales ci-après :

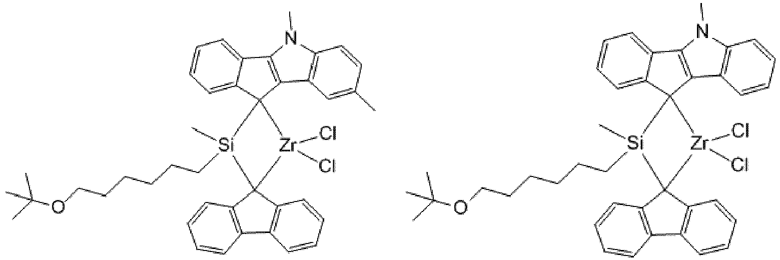

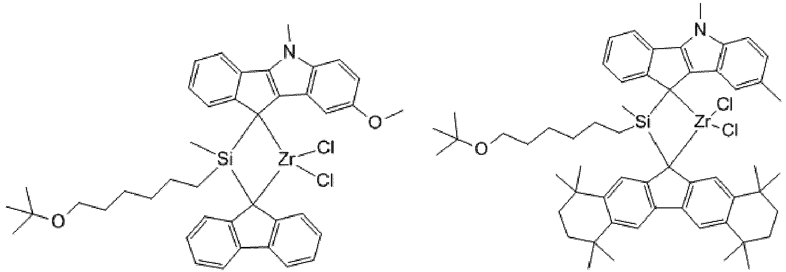

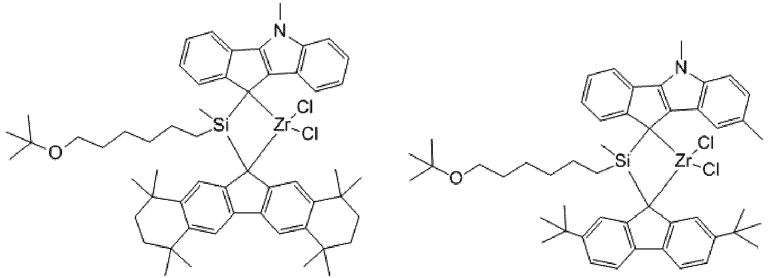

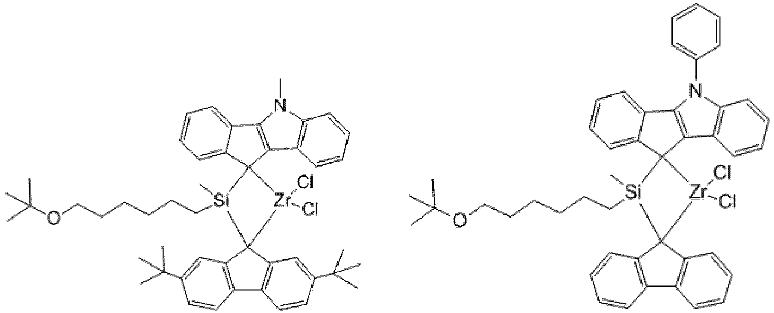

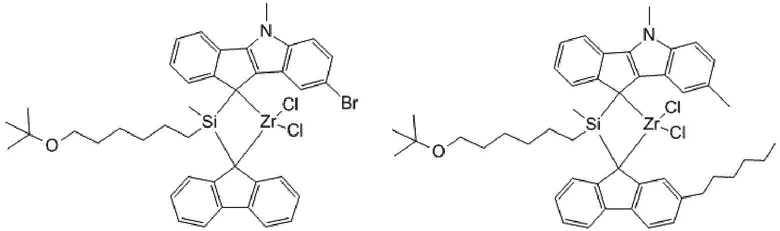

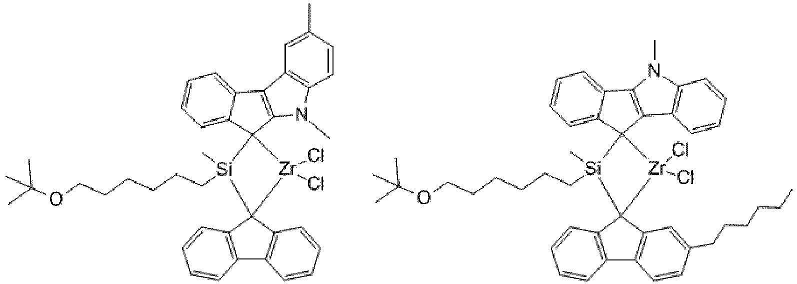

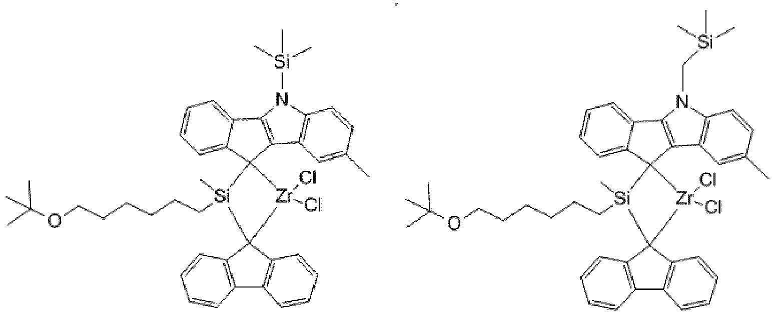

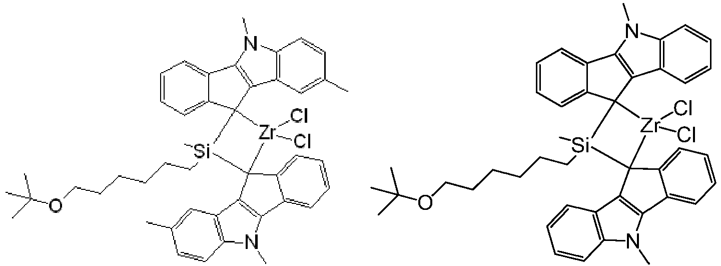

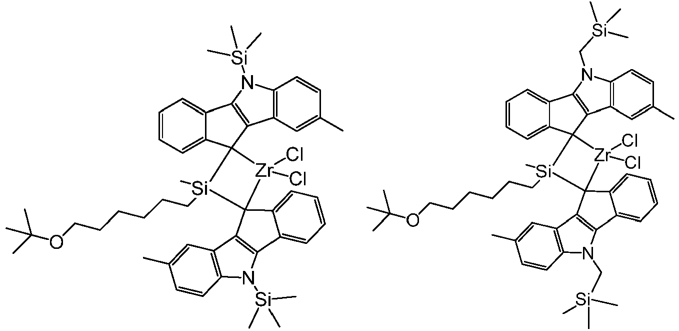

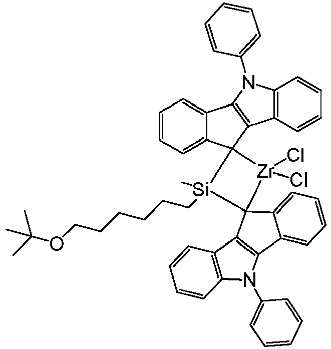

9. Polyoléfine selon la revendication 6, dans laquelle le composé de métallocène est un catalyseur métallocène supporté hybride comprenant le premier composé de métallocène, le deuxième composé de métallocène et un cocatalyseur, qui sont supportés dans un support.

10. Polyoléfine selon la revendication 6, dans laquelle le cocatalyseur comprend un premier cocatalyseur contenant un aluminium de la Formule chimique 6 ci-après et un deuxième cocatalyseur à base de borate de la Formule chimique 7 ci-après :
[Formule chimique 6] -[Al(R₁₈)-O-]ₖ-
dans la Formule chimique 6, les R₁₈ sont chacun indépendamment un halogène ou un hydrocarbyle substitué ou non substitué par un halogène ayant 1 à 20 atomes de carbone et k est un nombre entier de 2 ou plus de 2,
[Formule chimique 7] T⁺[BG₄]⁻
dans la Formule chimique 7, T⁺ est un ion polyatomique ayant une valence de +1, B est un bore dans un état d'oxydation de +3, et les G sont chacun indépendamment sélectionnés dans le groupe constitué d'hydride, dialkylamido, halogénure, alkoxyde, aryloxyde, hydrocarbyle, halocarbyle et hydrocarbyle substitué par un halo, et G a 20 carbone ou moins, à condition que G soit un halogénure dans une position ou moins.

11. Polyoléfine selon la revendication 6, dans laquelle le monomère d'oléfine comprend une ou plusieurs sortes de monomères sélectionnés dans le groupe constitué d'éthylène, propylène, 1-butène, 1-hexène, 1-octène, 1-pentène, 4-méthyl-1-pentène, 1-hexène, 1-heptène, 1-décène, 1-undécène, 1-dodécène, norbornène et éthylidènenorbornène.

12. Polyoléfine selon la revendication 1, dans laquelle la polyoléfine est utilisée dans un contenant alimentaire ou une capsule.
